(19) Europäisches Patentamt / European Patent Office / Office européen des brevets

(11) **EP 4 152 635 A1**

(12) **EUROPEAN PATENT APPLICATION**
published in accordance with Art. 153(4) EPC

(43) Date of publication:
**22.03.2023 Bulletin 2023/12**

(21) Application number: **21813455.9**

(22) Date of filing: **07.05.2021**

(51) International Patent Classification (IPC):
**H04B 7/06** (2006.01)

(52) Cooperative Patent Classification (CPC):
**H04B 7/06; H04L 27/34; Y02D 30/70**

(86) International application number:
**PCT/CN2021/092197**

(87) International publication number:
**WO 2021/238609 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2020 CN 202010479712**

(71) Applicant: **Huawei Technologies Co., Ltd.**
**Longgang District,**
**Shenzhen,**
**Guangdong 518129 (CN)**

(72) Inventor: **SUN, Huan**
**Shenzhen, Guangdong 518129 (CN)**

(74) Representative: **Maiwald GmbH**
**Engineering**
**Elisenhof**
**Elisenstrasse 3**
**80335 München (DE)**

(54) **METHOD, APPARATUS AND SYSTEM FOR SENDING DATA USING ELECTROMAGNETIC METASURFACE ARRAY**

(57) Embodiments of this application provide a data sending method and apparatus to which an electromagnetic metasurface array is applied, and a system. The method includes: obtaining first to-be-sent data; after the first to-be-sent data is obtained, determining, based on constellation information of the first to-be-sent data and a mapping relationship between the constellation information and a subarray, a first target subarray used to send the first to-be-sent data, where the first target subarray is a subarray of the electromagnetic metasurface array, and the first target subarray includes a preset quantity of array units; and after the first target subarray is determined, controlling the first target subarray to perform, based on the constellation information, amplitude and phase modulation on an incident carrier signal that reaches the first target subarray, and sending, by using the first target subarray, a modulated carrier signal corresponding to the first to-be-sent data. According to the method, when both the amplitude and the phase are modulated, a problem of out-of-band interference can be further avoided, to ensure that data transmission quality and data receiving are not affected.

FIG. 5

## Description

This application claims priority to Chinese Patent Application No. 202010479712.1, filed with the China National Intellectual Property Administration on May 29, 2020 and entitled "DATA SENDING METHOD AND APPARATUS TO WHICH ELECTROMAGNETIC METASURFACE ARRAY IS APPLIED, AND SYSTEM", which is incorporated herein by reference in its entirety.

## TECHNICAL FIELD

Embodiments of this application relate to the field of communications technologies, and in particular, to a data sending method and apparatus to which an electromagnetic metasurface array is applied, and a system.

## BACKGROUND

A conventional base station may be configured with a multiple-input multiple-output (multiple-input multiple-output) transmitter, and each antenna unit or virtual antenna unit array of the transmitter corresponds to an independent radio frequency channel. Although the transmitter has advantages of simultaneously transmitting a plurality of streams of a plurality of users, effectively suppressing interference between a plurality of users and a plurality of cells, or the like, the transmitter has a complex hardware structure, a large quantity of active antennas, and a large quantity of radio frequency circuits. The hardware structure leads to problems of low energy conversion efficiency and huge energy consumption of a system, which becomes a major challenge to a current 5th generation mobile communications technology (5th generation mobile networks, 5G) and a future mobile communications technology. With a continuous research of an electromagnetic metasurface array technology, designing the transmitter by using an electromagnetic metasurface array to simplify a structure of the transmitter and improve efficiency of the transmitter is becoming a research hotspot. The electromagnetic metasurface array is a composite material, and is formed by combining structures of a series of artificial units of a sub-wavelength size. The units interact with an electromagnetic wave in a specific manner, possess a unique electromagnetic property different from a natural material, and may produce physical phenomena such as negative refraction, a perfect lens, and electromagnetic stealth, to reflect and send a signal.

In the conventional technology, an electromagnetic metasurface array-based transmitter is provided. A transmit signal source in the transmitter sends a carrier signal, and the carrier signal is impinged on the electromagnetic metasurface array. In addition, the transmitter obtains phase information of a symbol of a baseband data stream based on a constellation mapping relationship, and dynamically adjusts equivalent circuit impedance of an array unit of the electromagnetic metasurface array based on the phase information, to modulate a phase of an incident carrier signal, and reflect and send the incident carrier signal.

However, when both an amplitude and a phase of the incident carrier signal are modulated in the method in the conventional technology, a problem of serious out-of-band interference is generated, and data transmission quality and a data receiving manner are further affected.

## SUMMARY

Embodiments of this application provide a data sending method and apparatus to which an electromagnetic metasurface array is applied, and a system, to resolve a problem, in the conventional technology, that serious out-of-band interference is caused when a harmonic is used to modulate both an amplitude and a phase.

According to a first aspect, an embodiment of this application provides a data sending method to which an electromagnetic metasurface array is applied. The method includes:

obtaining first to-be-sent data; after the first to-be-sent data is obtained, determining, based on constellation information of the first to-be-sent data and a mapping relationship between the constellation information and a subarray, a first target subarray used to send the first to-be-sent data, where the first target subarray is a subarray of the electromagnetic metasurface array, and the first target subarray includes a preset quantity of array units; and after the first target subarray is determined, controlling the first target subarray to perform, based on the constellation information, amplitude and phase modulation on an incident carrier signal that reaches the first target subarray, and sending, by using the first target subarray, a modulated carrier signal corresponding to the first to-be-sent data.

In the method, the first target subarray used to send the first to-be-sent data may be determined based on the constellation information of the first to-be-sent data and the mapping relationship between the constellation information and the subarray. Because different modulated amplitudes can be implemented when the subarray includes different quantities of array units, amplitude modulation of the incident carrier signal may be implemented by selecting a subarray that includes a specific quantity of array units and that corresponds to the constellation information. In addition, all array units of the first target subarray may be further controlled, based on the constellation information, to perform same phase modulation on the incident carrier signal, to adjust both an amplitude and a phase of the incident carrier signal. In the method, processing does not need to be performed based on a harmonic. Therefore, no out-of-band harmonic is generated. Therefore, according to the method, when both the amplitude and the phase are modulated, a problem of out-of-band interference can be further avoided, to ensure that data transmission quality and data receiving are not affected.

In addition, in a transmitter in this embodiment, the electromagnetic metasurface array does not actively transmit a signal, but only modulates the incident carrier signal. Therefore, power consumption of the transmitter is very low. In addition, the transmitter directly modulates the incident carrier signal based on information output by a baseband, without a need to use any active radio frequency circuit. Therefore, a small quantity of active radio frequency devices are required, and the transmitter has a simple structure, to greatly avoid a problem that an active device has a power loss and low conversion efficiency.

In a possible design, the mapping relationship between the constellation information and the subarray is used to indicate a correspondence between constellation information of target data and a quantity of array units of a target subarray that sends the target data.

A correspondence between constellation information and a quantity of array units of a subarray is established, so that when data transmission needs to be performed, a size of a modulation subarray corresponding to a constellation point may be quickly determined by using a mapping table, to modulate information corresponding to the constellation point.

In a possible design, the quantity of array units of the target subarray is obtained based on an amplitude of the target data in a constellation diagram, a maximum amplitude of the target data in the constellation diagram, and a quantity of array units of the electromagnetic metasurface array.

A modulation subarray determined in this manner can accurately modulate and send, in a given modulation manner, all information corresponding to the constellation point.

In a possible design, the array units of the target subarray are continuously distributed, or the array units of the target subarray are discretely distributed.

The array units of the target subarray are continuously distributed, to select a required modulation subarray by using a small quantity of control parameters, and reduce processing complexity. The array units of the target subarray are discretely distributed, to flexibly use all units of a metasurface, and enhance robustness in performance of the metasurface array.

In a possible design, if there is second to-be-sent data that is sent at a same time point as the first to-be-sent data, a second target subarray may be controlled to perform, based on constellation information of the second to-be-sent data, amplitude and phase modulation on an incident carrier signal that reaches the second target subarray, and the second target subarray sends a modulated carrier signal corresponding to the second to-be-sent data.

An array unit of the second target subarray does not overlap the array unit of the first target subarray.

In a possible design, if receiving devices of the first to-be-sent data and the second to-be-sent data are a same device, and a modulation manner of the first to-be-sent data is the same as a modulation manner of the second to-be-sent data, the quantity of array units of the first target subarray is the same as a quantity of array units of the second target subarray.

Target subarrays that have a same size and that do not overlap are allocated to two pieces of data that are sent to a same device and that have a same modulation manner, to simultaneously transmit dual streams of a single user, and improve spectral efficiency or a transmission rate of transmission from a system to a user.

In this possible design, a location of the first target subarray in the electromagnetic metasurface array is symmetrical to a location of the second target subarray in the electromagnetic metasurface array.

In a possible design, if receiving devices of the first to-be-sent data and the second to-be-sent data are a same device, and a modulation manner of the first to-be-sent data is different from a modulation manner of the second to-be-sent data, the quantity of array units of the first target subarray is different from a quantity of array units of the second target subarray.

Target subarrays that have different sizes and that do not overlap are allocated to two pieces of data that are sent to a same device and that have different modulation manners, to efficiently transmit a plurality of services of a same user, and meet a requirement of the plurality of services for a transmission indicator.

In a possible design, if a modulation order of the first to-be-sent data is higher than a modulation order of the second to-be-sent data, the quantity of array units of the first target subarray is greater than the quantity of array units of the second target subarray.

In a possible design, if the receiving devices of the first to-be-sent data and the second to-be-sent data are different devices, the quantity of array units of the first target subarray is different from the quantity of array units of the second target subarray.

Subarrays including different quantities of array units are allocated to data sent to different receiving devices, to optimally allocate an available resource of the electromagnetic metasurface, and maximize a total rate of the system.

In a possible design, if the receiving devices of the first to-be-sent data and the second to-be-sent data are different devices, the quantity of array units of the first target subarray is the same as the quantity of array units of the second target subarray.

The quantity of array units of the first target subarray is the same as the quantity of array units of the second target subarray. In this manner, an implementation is simple, and processing complexity of the system can be reduced.

In a possible design, when the first target subarray is controlled to perform, based on the constellation information, amplitude and phase modulation on the incident carrier signal that reaches the first target subarray, the first target subarray may be controlled to perform, based on the constellation information and beamforming information of the first to-be-sent data, amplitude and phase modulation on the incident carrier signal that reaches the first target subarray.

Through beamforming, energy of a signal reflected by the electromagnetic metasurface may be converged, to enhance equivalent channel quality of the user, improve a data transmission rate of the user and transmission efficiency of the system, and suppress signal interference between a plurality of users.

In this possible design, amplitude and phase modulation may be performed in the following process: generating a phase control parameter based on phase information indicated by the constellation information and the beamforming information of the first to-be-sent data; controlling, based on the phase control parameter, the first target subarray to perform phase modulation on the incident carrier signal that reaches each array unit of the first target subarray; and controlling the first target subarray to perform, based on an amplitude of a reflection coefficient of each array unit of the first target subarray, amplitude modulation on the incident carrier signal that reaches each array unit of the first target subarray.

In this possible design, the generating a phase control parameter based on phase information indicated by the constellation information and the beamforming information of the first to-be-sent data includes: generating a first control parameter based on the phase information indicated by the constellation information; generating a second control parameter based on the beamforming information of the first to-be-sent data; and adding the first control parameter and the second control parameter, to obtain the phase control parameter.

In this possible design, the generating a first control parameter based on the phase information indicated by the constellation information includes: generating the first control parameter based on the phase information indicated by the constellation information and a preset mapping relationship between a phase and a control parameter.

In this possible design, the controlling, based on the phase control parameter, the first target subarray to perform phase modulation on the incident carrier signal that reaches each array unit of the first target subarray includes: performing digital-to-analog conversion on the phase control parameter, to obtain a phase control signal; and inputting the phase control signal into the first target subarray, so that the first target subarray performs, based on the phase control signal, phase modulation on the incident carrier signal that reaches each array unit of the first target subarray.

In a possible design, an available array in the electromagnetic metasurface array may be further determined based on a first system parameter.

The first system parameter includes at least one of the following: a shape and a size of the electromagnetic metasurface array, a characteristic of an antenna feeder antenna, a carrier frequency, or a distance between the electromagnetic metasurface array and the antenna feeder antenna.

All array units of the available array have similar processing capabilities for an incident electromagnetic wave. Therefore, the available array may be divided into subarrays, to implement corresponding amplitude modulation, and the array unit or the subarray performs phase modulation, to implement amplitude and phase modulation of an incident electron wave, so as to improve transmission efficiency of the system.

In a possible design, the first target subarray is a subarray of the available array.

In a possible design, if a quantity of array units of a second subarray is greater than a quantity of array units of a first subarray, the second subarray includes all array units of the first subarray.

Both the second subarray and the first subarray are subarrays of the available array.

In a possible design, the mapping relationship between the constellation information and the subarray may be further adjusted.

In a possible design, the mapping relationship between the constellation information and the subarray may be adjusted in any one of the following manners: adjusting the mapping relationship between the constellation information and the subarray based on a second system parameter, where the second system parameter includes at least one of the following: a shape and a size of the electromagnetic metasurface array, a characteristic of an antenna feeder antenna, a carrier frequency, and a distance between the electromagnetic metasurface array and the antenna feeder antenna; or receiving indication information, where the indication information is used to indicate the mapping relationship between the constellation information and the subarray; or adjusting the mapping relationship between the constellation information and the subarray based on air interface measurement information of a reference signal.

In a possible design, status information of the electromagnetic metasurface array may be further determined by sending the reference signal.

First, the reference signal is sent. The reference signal is obtained after the electromagnetic metasurface array adjusts a phase and an amplitude of the incident carrier signal based on reference data. Second, the status information of the electromagnetic metasurface array is determined based on the reference signal. The status information is used to represent a hardware parameter of the electromagnetic metasurface array.

In this possible design, the reference signal may be sent through a downlink control channel.

In this possible design, the status information of the electromagnetic metasurface array may be determined in any one of the following manners:

determining the status information of the electromagnetic metasurface array based on the air interface measurement information of the reference signal; or determining the status information of the electromagnetic metasurface array based on a response signal of the reference signal.

The status information of the electromagnetic metasurface array is determined by sending the reference signal, so that additional overheads of resources of the downlink control channel can be reduced. In addition, the control channel may independently complete a task of initializing and updating a parameter of the transmitter, to achieve high efficiency. In addition, a sensing channel that sends the reference signal may be further used to support a service requirement of a lower latency or a determined latency requirement.

According to a second aspect, an embodiment of this application provides a data sending apparatus to which an electromagnetic metasurface array is applied. The apparatus includes:

an obtaining module, configured to obtain first to-be-sent data;

a processing module, configured to: determine, based on constellation information of the first to-be-sent data and a mapping relationship between the constellation information and a subarray, a first target subarray used to send the first to-be-sent data, where the first target subarray is a subarray of the electromagnetic metasurface array, and the first target subarray includes a preset quantity of array units; and control the first target subarray to perform, based on the constellation information, amplitude and phase modulation on an incident carrier signal that reaches the first target subarray; and

an output module, configured to output a modulated carrier signal corresponding to the first to-be-sent data.

In a possible design, the mapping relationship between the constellation information and the subarray is used to indicate a correspondence between constellation information of target data and a quantity of array units of a target subarray that sends the target data.

In a possible design, the quantity of array units of the target subarray is obtained based on an amplitude of the target data in a constellation diagram, a maximum amplitude of the target data in the constellation diagram, and a quantity of array units of the electromagnetic metasurface array.

In a possible design, the array units of the target subarray are continuously distributed, or the array units of the target subarray are discretely distributed.

In a possible design, the processing module is further configured to:

if there is second to-be-sent data that is sent at a same time point as the first to-be-sent data, control a second target subarray to perform, based on constellation information of the second to-be-sent data, amplitude and phase modulation on an incident carrier signal that reaches the second target subarray; and the output module is further configured to output a modulated carrier signal corresponding to the second to-be-sent data.

An array unit of the second target subarray does not overlap the array unit of the first target subarray.

In a possible design, if receiving devices of the first to-be-sent data and the second to-be-sent data are a same device, and a modulation manner of the first to-be-sent data is the same as a modulation manner of the second to-be-sent data, the quantity of array units of the first target subarray is the same as a quantity of array units of the second target subarray.

If receiving devices of the first to-be-sent data and the second to-be-sent data are a same device, and a modulation manner of the first to-be-sent data is different from a modulation manner of the second to-be-sent data, the quantity of array units of the first target subarray is different from a quantity of array units of the second target subarray.

In a possible design, if a modulation order of the first to-be-sent data is higher than a modulation order of the second to-be-sent data, the quantity of array units of the first target subarray is greater than the quantity of array units of the second target subarray.

In a possible design, if the receiving devices of the first to-be-sent data and the second to-be-sent data are different devices, the quantity of array units of the first target subarray is different from the quantity of array units of the second target subarray.

In a possible design, the processing module is specifically configured to:

control the first target subarray to perform, based on the constellation information and beamforming information of the first to-be-sent data, amplitude and phase modulation on the incident carrier signal that reaches the first target subarray.

In a possible design, the processing module is specifically configured to:
generate a phase control parameter based on phase information indicated by the constellation information and the beamforming information of the first to-be-sent data; control, based on the phase control parameter, the first target subarray to perform phase modulation on the incident carrier signal that reaches each array unit of the first target subarray; and control the first target subarray to perform, based on an amplitude of a reflection coefficient of each array unit of the first target subarray, amplitude modulation on the incident carrier signal that reaches each array unit of the first target subarray.

In a possible design, the processing module is specifically configured to:
generate a first control parameter based on the phase information indicated by the constellation information; generate a second control parameter based on the beamforming information of the first to-be-sent data; and add the first control parameter and the second control parameter, to obtain the phase control parameter.

In a possible design, the processing module is specifically configured to:
generate the first control parameter based on the phase information indicated by the constellation information and a preset mapping relationship between a phase and a control parameter.

In a possible design, the processing module is specifically configured to:
perform digital-to-analog conversion on the phase control parameter, to obtain a phase control signal; and input the phase control signal into the first target subarray, so that the first target subarray performs, based on the phase control signal, phase modulation on the incident carrier signal that reaches each array unit of the first target subarray.

In a possible design, the processing module is further configured to:
determine an available array in the electromagnetic metasurface array based on a first system parameter, where the first system parameter includes at least one of the following: a shape and a size of the electromagnetic metasurface array, a characteristic of an antenna feeder antenna, a carrier frequency, or a distance between the electromagnetic metasurface array and the antenna feeder antenna.

In a possible design, the first target subarray is a subarray of the available array.

In a possible design, if a quantity of array units of a second subarray is greater than a quantity of array units of a first subarray, the second subarray includes all array units of the first subarray. Both the second subarray and the first subarray are subarrays of the available array.

In a possible design, the processing module is further configured to:
adjust the mapping relationship between the constellation information and the subarray.

In a possible design, the processing module is specifically configured to:
adjust the mapping relationship between the constellation information and the subarray based on a second system parameter, where the second system parameter includes at least one of the following: a shape and a size of the electromagnetic metasurface array, a characteristic of an antenna feeder antenna, a carrier frequency, and a distance between the electromagnetic metasurface array and the antenna feeder antenna; or receive indication information, where the indication information is used to indicate the mapping relationship between the constellation information and the subarray; or adjust the mapping relationship between the constellation information and the subarray based on air interface measurement information of a reference signal.

According to a third aspect, an embodiment of this application provides a communications apparatus, including a processor. The processor is connected to a memory, the memory is configured to store a computer program, and the processor is configured to execute the computer program stored in the memory, so that the communications apparatus performs the method in the first aspect.

According to a fourth aspect, an embodiment of this application provides a computer-readable storage medium. The computer-readable storage medium stores a computer program, and when the computer program is run, the method in the first aspect is implemented.

According to a fifth aspect, an embodiment of this application provides a communications system, including the communications apparatus in the third aspect.

According to a sixth aspect, an embodiment of this application provides a chip, including a communications interface and an integrated circuit. The integrated circuit is configured to: process, in the method in the first aspect, first to-be-sent data obtained through the communications interface, obtain a modulated carrier signal corresponding to the first to-be-sent data, and output the modulated carrier signal through the communications interface.

According to a seventh aspect, an embodiment of this application provides a computer program product. The computer program product includes computer program code, and when the computer program code is executed by a computer, the computer is enabled to perform the method in the first aspect.

**BRIEF DESCRIPTION OF DRAWINGS**

FIG. 1 is a schematic diagram of a system of an electromagnetic metasurface array-based transmitter based on an electromagnetic metasurface array in the conventional technology;

FIG. 2 is a schematic diagram of an example scenario according to an embodiment of this application;

FIG. 3 is a diagram of an example system architecture according to an embodiment of this application;

FIG. 4 is a diagram of another example system architecture according to an embodiment of this application;

FIG. 5 is a schematic flowchart of a data sending method to which an electromagnetic metasurface array is applied according to an embodiment of this application;

FIG. 6 is a constellation diagram of 16QAM;

FIG. 7 is a schematic interaction diagram of processing and sending first to-be-sent data;

FIG. 8 is an example diagram of a distribution existing when a target subarray includes 160 array units;

FIG. 9 is an example diagram of another distribution existing when a target subarray includes 160 array units;

FIG. 10 is an example diagram of a distribution existing when a target subarray includes 358 array units;

FIG. 11 is an example diagram of another distribution existing when a target subarray includes 358 array units;

FIG. 12 is an example diagram of a discrete distribution existing when a target subarray includes 160 array units;

FIG. 13 is an example diagram of a complete overlapping-based distribution manner of 16QAM;

FIG. 14 is an example diagram of a target subarray distribution manner used when 16QAM is used for each of two pieces of data;

FIG. 15 is an example diagram of a target subarray distribution manner used when different modulation manners are used for two pieces of data;

FIG. 16 is an example diagram of a subarray distribution existing when data with a high reliability requirement exists during multi-stream transmission;

FIG. 17 is a schematic flowchart of performing amplitude and phase modulation based on constellation information and beamforming information of first to-be-sent data;

FIG. 18 is a schematic interaction diagram of processing and sending first to-be-sent data based on beamforming information;

FIG. 19 is an example diagram in which a transmitter selects an available array based on a first system parameter;

FIG. 20 is a schematic diagram of sending a reference signal through a downlink control channel;

FIG. 21 is a schematic diagram of an example structure of a sensing channel;

FIG. 22 is a diagram of a module structure of a data sending apparatus to which an electromagnetic metasurface array is applied according to an embodiment of this application; and

FIG. 23 is a schematic diagram of a structure of a communications apparatus according to an embodiment of this application.

## DESCRIPTION OF EMBODIMENTS

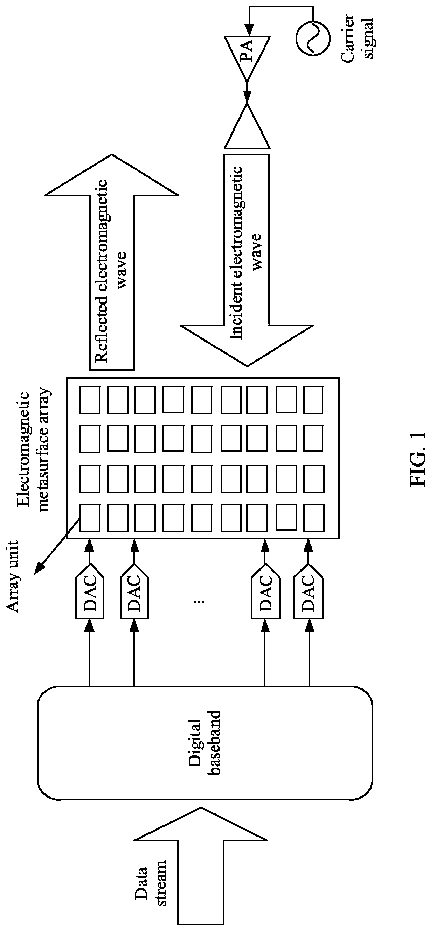

FIG. 1 is a schematic diagram of a system of an electromagnetic metasurface array-based transmitter in the conventional technology. As shown in FIG. 1, a transmit signal source in the transmitter sends a single tone signal, the single tone signal is amplified by a power amplifier (power amplifier, PA) and then coupled to a feed antenna for sending, and the single tone signal is used a modulated carrier signal (incident electromagnetic wave) and is impinged on the electromagnetic metasurface array. In addition, a baseband data stream is first divided into groups based on a transmission scheme configured in the system. For example, if the data stream is 0010101101, and a modulation manner is a quadrature phase shift keying (quadrature phase shift keying, QPSK) modulation manner, every two bits of input stream data sequentially form one symbol, and further, phase information corresponding to each symbol is obtained based on a constellation mapping relationship of the QPSK modulation manner. After phase information of a signal of the baseband data stream is obtained, the phase information is mapped onto a control voltage based on a relationship between a phase of a reflection coefficient of an array unit and the control voltage, and then a variable capacitance diode of an array unit of the electromagnetic metasurface array is controlled by using a digital-to-analog converter (digital-to-analog converter, DAC), to dynamically adjust impedance of an equivalent circuit, so as to modulate a phase of an incident carrier signal, reflect the incident carrier signal, and send a reflected electromagnetic wave.

For all array units of the electromagnetic metasurface array, equivalent impedance $Z_1$ of the array unit may be changed by controlling a capacitance value of the variable capacitance diode of the array unit. Therefore, a reflection coefficient $\Gamma$ obtained when the incident electromagnetic wave passes through the array unit may be expressed based on Formula (1).

$$\Gamma = \frac{Z_1 - Z_0}{Z_1 + Z_0} = Ae^{j\varphi} \tag{1}$$

Herein, $Z_0$ is impedance of air, and is a constant. An amplitude and a phase of the reflected electromagnetic wave may be controlled by adjusting equivalent impedance $Z_1$ of the array unit. Herein, $A$ is an amplitude of the reflection coefficient $\Gamma$, and $\varphi$ is a phase of the reflection coefficient $\Gamma$.

It is assumed that the incident electromagnetic wave is S and the reflected electromagnetic wave is R. After the reflection coefficient of the array unit is calculated based on Formula (1), the reflected electromagnetic wave may be calculated based on Formula (2).

$$R = \Gamma S \qquad (2)$$

It is assumed that phase information that corresponds to a symbol sent at a moment 00 and that is obtained based on the constellation mapping relationship is $\varphi_{00}$. A relationship among a transmit electromagnetic wave R for reflecting the symbol, the reflection coefficient $\Gamma$ of the array unit, and the incident electromagnetic wave S is shown in Formula (3).

$$R = \Gamma S = Ae^{j\varphi_{00}}A_c e^{j2\pi f_c t} = AA_c e^{j(2\pi f_c t + \varphi_{00})} = A_0 e^{j(2\pi f_c t + \varphi_{00})} \qquad (3)$$

Herein, $A_0$ is a constant value. Therefore, the reflected electromagnetic wave reflected by the electromagnetic metasurface array is a signal obtained after phase modulation of the incident electromagnetic wave is completed.

In the transmitter shown in FIG. 1, if the reflection coefficient of the array unit remains unchanged in one transmission symbol periodicity, only phase modulation of the incident electromagnetic wave can be performed as described in Formula (3), and a same phase is used for all array units of the electromagnetic metasurface array. In this manner, amplitude modulation cannot be performed on the incident electromagnetic wave. Therefore, transmission efficiency or a transmission rate of the transmitter is affected. To modulate both an amplitude and a phase of the incident electromagnetic wave, in the conventional technology, all array units change the phase linearly in one symbol periodicity, so that the incident electromagnetic wave generates a plurality of harmonics, and amplitude and phase modulation may be performed on a corresponding harmonic. Because the harmonic is outside an operating frequency of the incident electromagnetic wave, a problem of serious out-of-band interference occurs when amplitude and phase modulation is performed on the incident electromagnetic wave on the harmonic, affecting data transmission quality and affecting a data receiving manner of a receiving device.

In consideration of the problem of serious out-of-band interference that occurs when both the amplitude and the phase of the incident electromagnetic wave are adjusted in the conventional technology, in this embodiment of this application, a size of the subarray of the electromagnetic metasurface array used for signal modulation is changed to complete adjustment of both the amplitude and the phase of the electromagnetic wave signal, without causing the problem of out-of-band interference.

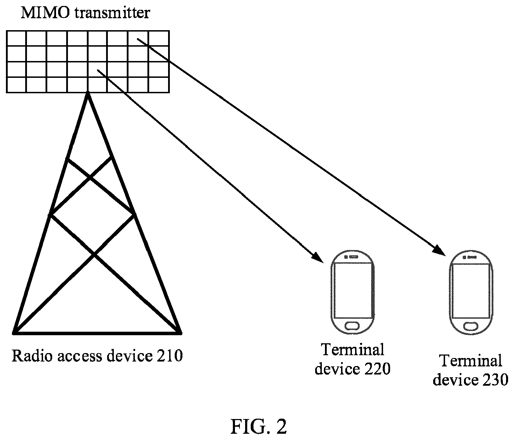

FIG. 2 is a schematic diagram of an example scenario according to an embodiment of this application. As shown in FIG. 2, this embodiment of this application may be applied to a scenario in which a radio access device 210 sends data to at least one terminal device (for example, a terminal device 220 and a terminal device 230 in FIG. 2). In this scenario, a MIMO transmitter is configured on the radio access network device 210, and an electromagnetic metasurface array is deployed on the MIMO transmitter. The radio access network device sends the data to the terminal device based on the electromagnetic metasurface array in a method in embodiments of this application. The terminal device may receive the data in an original manner. The terminal device is connected to the radio access network device in a wireless manner. The terminal device may be located at a fixed position, or may be mobile. The terminal device may also be referred to as a terminal terminal, user equipment (user equipment, UE), a mobile station (mobile station, MS), a mobile terminal (mobile terminal, MT), or the like.

It should be noted that in FIG. 2, that the radio access network device is configured with the electromagnetic metasurface array-based transmitter is only used as an example to describe the scenario. However, this embodiment of this application is not limited thereto. In a specific implementation process, the electromagnetic metasurface array-based transmitter may be configured in a radio access network, or the terminal device may be configured with the electromagnetic metasurface array-based transmitter, or another device that needs to send data in a wireless manner may be configured with the transmitter based on the electromagnetic metasurface array.

When a solution in this embodiment of this application is applied to the radio access network device, the radio access network device may be a base transceiver station (base transceiver station, BTS) in a global system for mobile communications (global system for mobile communication, GSM) or a code division multiple access (code division multiple access, CDMA) network, a node base station (node base station, NB) in wideband code division multiple access (wideband code division multiple access, WCDMA), an evolved (evolutional) NB (eNB or eNodeB) in long term evolution (long term evolution, LTE), a radio controller in a cloud radio access network (cloud radio access network, CRAN) scenario, a base station in a 5G mobile communications system or a next-generation radio (new radio, NR) communications system, a base station in a future mobile communications system, an access node in a Wi-Fi system, a device that performs a function of a base station in device-to-device (Device-to-Device, D2D) communication and machine communication, an access network device or an internet of vehicles device in a future evolved PLMN network, or the like. A specific technology and a specific device form used by the radio access network device are not limited in this embodiment of this application. In this embodiment of this application, terms 5G and NR may be equivalent.

When the solution in this embodiment of this application is applied to the terminal device, the terminal device may be a mobile phone (mobile phone), a tablet computer (Pad), a computer having a wireless transceiver function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in telemedicine (remote medical surgery), a wireless terminal in smart grid (smart grid), a wireless terminal in transportation safety (transportation safety), a wireless terminal in smart city (smart city), a wireless terminal in smart home (smart home), or the like.

The radio access network device and the terminal device may be deployed on a land, including an indoor or outdoor device, or a handheld or vehicle-mounted device; or may be deployed on water; or may be deployed on an airplane, a balloon, and an artificial satellite in the air. An application scenario of the radio access network device and the terminal device is not limited in this embodiment of this application.

For ease of describing the solution in this embodiment of this application, the following provides descriptions by using an example in which the radio access network device is configured with the electromagnetic metasurface array-based transmitter.

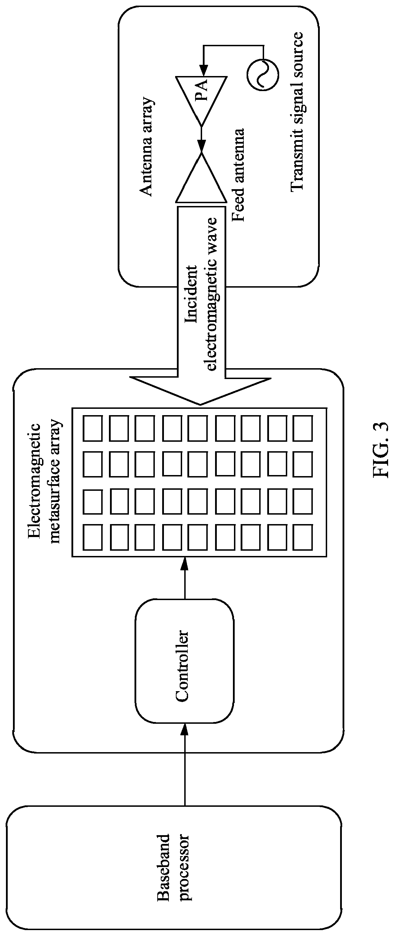

FIG. 3 is a diagram of an example system architecture according to an embodiment of this application. As shown in FIG. 3, a transmitter is a centralized transmitter. An electromagnetic metasurface array is controlled by a controller, and the controller and the electromagnetic metasurface array are deployed at a same location. That a radio access network device is configured with the transmitter is used as an example. The transmitter includes an antenna array and the electromagnetic metasurface array. The antenna array includes a transmit signal source, a PA, and a feed antenna. Both the antenna array and the electromagnetic metasurface array may be deployed at a location at a small distance from a baseband processor of the radio access network device. In this case, the controller of the electromagnetic metasurface array and the baseband processor of the radio access network device may be a same physical processor. In other words, the electromagnetic metasurface array may be controlled by the baseband processor of the radio access network device. Alternatively, the controller of the electromagnetic metasurface array and the baseband processor of the radio access network device may be different physical processors (as illustrated in FIG. 3, the controller of the electromagnetic metasurface array and the baseband processor of the radio access network device are different physical processors). That the controller of the electromagnetic metasurface array and the baseband processor of the radio access network device are different physical processors is used as an example. The transmit signal source of the antenna array sends a single tone signal, the single tone signal is amplified by the PA and coupled to the feed antenna for sending, and the single tone signal is used as an incident carrier signal and is impinged on the electromagnetic metasurface array. In addition, the baseband processor sends to-be-sent data to the controller of the electromagnetic metasurface array through an internal bus or an external connection cable, and the controller generates a control signal to control the electromagnetic metasurface array to modulate, reflect, and send the incident carrier signal.

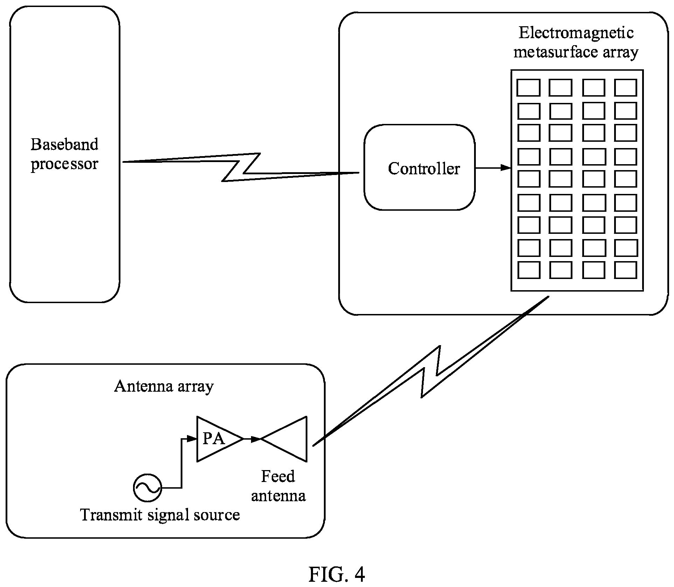

FIG. 4 is a diagram of another example system architecture according to an embodiment of this application. As shown in FIG. 4, a transmitter is a distributed transmitter. An electromagnetic metasurface array is controlled by a controller, and the controller and the electromagnetic metasurface array are deployed at a same location. That a radio access network device is configured with the transmitter is used as an example. The transmitter includes an antenna array and the electromagnetic metasurface array. The antenna array includes a transmit signal source, a PA, and a feed antenna. A distance between the antenna array of the transmitter and the electromagnetic metasurface array is long, and a distance between the electromagnetic metasurface array and a baseband processor is long. In this case, the transmit signal source of the antenna array sends a single tone signal, the single tone signal is amplified by the PA and coupled to the feed antenna for sending, and the single tone signal is used as an incident carrier signal and is impinged on the electromagnetic metasurface array. In addition, the baseband processor sends to-be-sent data to the controller of the electromagnetic metasurface array in a wired or wireless manner (the wireless manner is used as an example in FIG. 4), and the controller generates a control signal to control the electromagnetic metasurface array to modulate, reflect, and send the incident carrier signal.

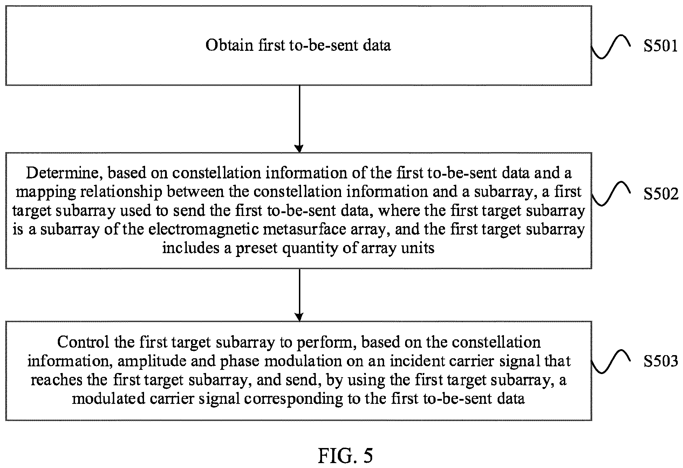

FIG. 5 is a schematic flowchart of a data sending method to which an electromagnetic metasurface array is applied according to an embodiment of this application. The method may be performed by the transmitter shown in FIG. 3 or FIG. 4, and may be specifically performed by a controller of the electromagnetic metasurface array. It should be noted that, when a centralized deployment manner shown in FIG. 3 is used for the transmitter, the controller may be a baseband processor of a radio access network device, or may be another control unit. For example, a central control unit is used to perform controlling. In this application, that the baseband processor performs controlling is used as an example for description. As shown in FIG. 5, the method includes the following steps.

S501: Obtain first to-be-sent data.

For example, when the radio access network device needs to send the first to-be-sent data to a terminal device, the controller may obtain the first to-be-sent data. For example, the baseband processor of the radio access network device sends the first to-be-sent data to the controller, or when the baseband processor serves as the controller, the first to-be-sent data is obtained after the first to-be-sent data is generated.

The to-be-sent data generated by the baseband processor is a continuous data stream, for example, 00101011. Based on different modulation manners, each carrier signal sent by the transmitter carries data of a different length. For example, if a QPSK modulation manner is used, each carrier signal may carry 2 bits of data. For another example, if a 16 quadrature amplitude modulation (quadrature amplitude modulation, QAM) manner is used, each carrier signal may carry 4 bits of data. Therefore, after obtaining the continuous data stream, the controller may first sequentially divide the data stream into groups based on a data modulation manner, and separately modulate, reflect, and send each group of data. For example, if a to-be-sent data stream is 00101011, and a used modulation manner is 16QAM, the data stream may be divided into two groups: 0010 and 1011, and each group of data is carried and sent by using one carrier signal. Each group of data is processed, reflected, and sent in a same process. The first to-be-sent data may be any group of to-be-sent data after the data is grouped.

Optionally, a modulation manner of the first to-be-sent data may be predetermined by the baseband processor based on status information of a receiving device of the data and a data status of the first to-be-sent data. The receiving device may be, for example, the terminal device, and the status information of the receiving device may include channel status information, location information of the receiving device, or the like. The data status of the first to-be-sent data may include, for example, a latency requirement, an importance degree, a data length, or the like of the first to-be-sent data.

S502: Determine, based on constellation information of the first to-be-sent data and a mapping relationship between the constellation information and a subarray, a first target subarray used to send the first to-be-sent data, where the first target subarray is a subarray of the electromagnetic metasurface array, and the first target subarray includes a preset quantity of array units.

The constellation information of the first to-be-sent data can indicate an amplitude and a phase of the first to-be-sent data in a used modulation manner.

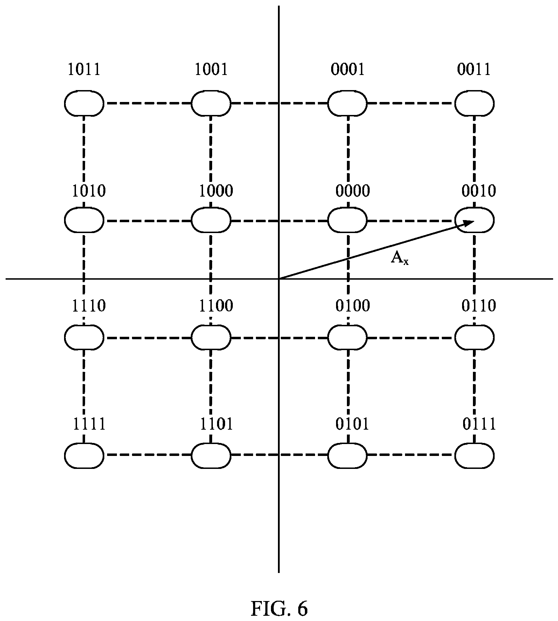

Optionally, the constellation information of the first to-be-sent data may be obtained based on the modulation manner of the first to-be-sent data and a constellation diagram of the modulation manner. For example, the modulation manner of the first to-be-sent data is 16QAM, and a constellation diagram of 16QAM is shown in FIG. 6. FIG. 6 is a constellation diagram of 16QAM. It is assumed that the first to-be-sent data is 0000. The constellation information of the first to-be-sent data may be obtained based on the constellation diagram. The constellation information may be specifically in any one of the following forms:

1. The constellation information is a symbol location, namely, a constellation point of the first to-be-sent data in the constellation diagram of 16QAM. The constellation information may be used to indicate the amplitude and the phase of the first to-be-sent data.
2. The constellation information may be an amplitude and a phase of the first to-be-sent data in the 16QAM modulation manner.
3. The constellation information may further be the first to-be-sent data in the constellation diagram of 16QAM. In the constellation diagram of 16QAM, the amplitude and the phase may be learned of provided that a bit value of the first to-be-sent data is learned of.
4. The constellation information is a combination of some or all of the three types of constellation information.

After learning of the constellation information of the first to-be-sent data, the controller may determine, based on the constellation information and the mapping relationship between the constellation information and the subarray, the first target subarray used to send the first to-be-sent data. The first target subarray may also be referred to as a subarray used for modulation.

One subarray may include the preset quantity of array units of the electromagnetic metasurface array, and may be specifically some or all array units of the electromagnetic metasurface array. Subarrays corresponding to constellation information with a same amplitude include a same quantity of array units. The constellation diagram of 16QAM shown in FIG. 6 is used as an example. If amplitudes of four pieces of data 1111/1011/0011/0111 are the same, and are all maximum amplitude values in the constellation diagram, subarrays used to send the four pieces of data include a same quantity of array units. A subarray including a corresponding quantity of array units may be selected for the first to-be-sent data based on the mapping relationship between the constellation information and the subarray. Specifically, if an amplitude of the constellation point corresponding to the first to-be-sent data is small, a subarray including a small quantity of array units may be selected; and if the amplitude of the constellation point corresponding to the first to-be-sent data is large, a subarray including a large quantity of array units may be selected. Because different modulated amplitudes can be implemented when a subarray includes different quantities of array units, in this embodiment, a size of the subarray, namely, a quantity of included array units, is adjusted based on the mapping relationship between the constellation information and the subarray, to complete modulation of an amplitude of an incident carrier signal corresponding to to-be-sent data.

The mapping relationship between the constellation information and the subarray may be predetermined and obtained. A specific process is described in detail in the following embodiment. Particularly, in consideration that a quantity of available array units changes when some array units of the array may be damaged, the mapping relationship between the constellation information and the subarray needs to be adjusted. Certainly, such adjustment is also quasi-static. Therefore, for a specific time of specific scheduling and data transmission, the mapping relationship may still be considered to be predetermined and obtained.

S503: Control the first target subarray to perform, based on the constellation information, amplitude and phase modulation on an incident carrier signal that reaches the first target subarray, and send, by using the first target subarray, a modulated carrier signal corresponding to the first to-be-sent data.

As described above, an amplitude of the incident carrier signal may be modulated by selecting, for the first to-be-sent data, a first target subarray corresponding to the constellation information of the first to-be-sent data, namely, by changing the size of the subarray. In addition, each array unit of the first target subarray may be controlled to perform same phase modulation on the incident carrier signal based on phase information indicated by the first to-be-sent data.

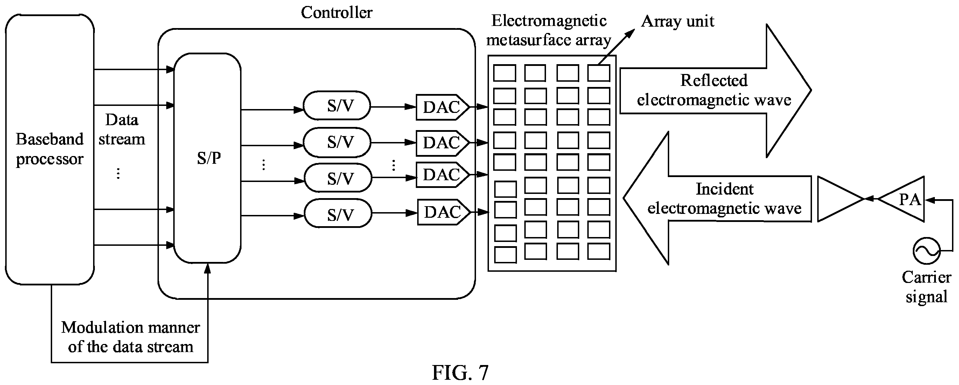

FIG. 7 is a schematic interaction diagram of processing and sending first to-be-sent data. As shown in FIG. 7, the baseband processor sends a data stream and a modulation manner of the data stream to the controller. After receiving the data stream, the controller divides the data stream into groups based on the modulation manner. One group is the first to-be-sent data. The controller selects the first target subarray based on the constellation information of the first to-be-sent data and the mapping relationship. The process is a data stream to subarray mapping process (stream to panel, S/P). The controller may learn, based on the constellation information of the first to-be-sent data, of phase information that needs to be modulated, map the phase information onto voltage information (stream to voltage, S/V) that is used to control a phase of an incident carrier signal, perform digital-to-analog conversion on the voltage information, to obtain a bias voltage, and input the bias voltage into each array unit of the first target subarray. In addition, the antenna array impinges the incident carrier signal by using each array unit of the first target subarray. The bias voltage is input into each array unit, to control a capacitance value, an inductance value, or a resistance value of the array unit, so as to change equivalent impedance of the array unit. As shown in Formula (1), the equivalent impedance of the array unit is adjusted to control an amplitude and a phase of an incident carrier signal that reaches the array unit. All array units of the first target subarray perform same phase modulation on the incident carrier signal. In addition, all the array units of the first target subarray jointly complete amplitude modulation of the incident carrier signal. After completing amplitude and phase modulation of the incident carrier signal, the first target subarray reflects a modulated carrier signal.

In this embodiment, the first target subarray used to send the first to-be-sent data may be determined based on the constellation information of the first to-be-sent data and the mapping relationship between the constellation information and the subarray. Because different modulated amplitudes can be implemented when the subarray includes different quantities of array units, amplitude modulation of the incident carrier signal may be implemented by selecting a subarray that includes a specific quantity of array units and that corresponds to the constellation information. In addition, all array units of the first target subarray may be further controlled, based on the constellation information, to perform same phase modulation on the incident carrier signal, to adjust both the amplitude and the phase of the incident carrier signal. In the method, processing does not need to be performed based on a harmonic. Therefore, no out-of-band harmonic is generated. Therefore, according to the method, when both the amplitude and the phase are modulated, a problem of out-of-band interference can be further avoided, to ensure that data transmission quality and data receiving are not affected. In addition, in the transmitter in this embodiment, the electromagnetic metasurface array does not actively transmit a signal, but only modulates the incident carrier signal. Therefore, power consumption of the transmitter is very low. In addition, the transmitter directly modulates the incident carrier signal based on information output by a baseband, without a need to use any active radio frequency circuit. Therefore, a small quantity of active radio frequency devices are required, and the transmitter has a simple structure, to greatly avoid a problem that an active device has a power loss and low conversion efficiency.

The following describes an optional manner of determining the mapping relationship between the constellation information and the subarray.

It is assumed that the electromagnetic metasurface array includes a total of K array units, and an amplitude of a reflection coefficient of each array unit is $A_k$, where $A_k$ is a number less than or equal to 1 and greater than or equal to 0. When $A_k$ is 0, it may be considered to be equivalent to disabling the array unit; and when $A_k$ is 1, full power transmission is performed. Phase control parameters of all the array units are the same. In other words, all the array units perform same phase modulation on the incident carrier signal. If the K array units modulate the incident carrier signal, a modulated and reflected carrier signal S may be expressed based on Formula (4).

$$S = \left(\sum_{k=1}^{K} A_k e^{j\varphi}\right) e^{j2\pi f_c t} = \underbrace{\left(\sum_{k=1}^{K} A_k\right)}_{A_0} e^{j(2\pi f_c t + \varphi)} \tag{4}$$

In Formula (4), $A_0$ may represent an equivalent antenna aperture of a subarray used to modulate the amplitude. It can be learned that, modulation of the amplitude of the incident carrier signal can be completed by changing the size of the subarray, namely, an effective aperture of the subarray. For example, a larger quantity of array units included in the subarray need to be used for a larger amplitude corresponding to the to-be-sent data. In this case, a larger value of $A_0$ in Formula (4) indicates a larger modulated amplitude.

Based on the description of Formula (4), the size of the subarray used for modulation, namely, a quantity of array units included in the subarray, may be determined in the following manner.

It is assumed that the electromagnetic metasurface array includes a total *of K* array units. If the *K* array units are used to jointly implement a maximum amplitude value in the constellation diagram, based on a distance relationship between constellation points in a protocol, a quantity N of array units that may be used for modulation performed based on different constellation information may be calculated based on Formula (5).

$$N = \left\lceil \frac{A_x}{A_{0000}} \times K \right\rceil \tag{5}$$

Herein, $A_x$ is an amplitude value (as shown in the example in FIG. 6) indicated by specific constellation information, and $A_{0000}$ is the maximum amplitude value in the constellation diagram.

The 16QAM modulation manner is used as an example. It can be learned from FIG. 6 that 0000/0010/1010/1000 corresponds to the maximum amplitude value in the constellation diagram. Therefore, $A_{0000}$ may be the amplitude value corresponding to 0000/0010/1010/1000. For any data for which the 16QAM modulation manner is used, after an amplitude value $A_x$ of the data is obtained based on the constellation diagram, a quantity A of array units required for modulating the amplitude may be calculated based on Formula (5).

For a specific modulation manner, a quantity of array units required for modulating each amplitude may be calculated in advance based on Formula (5). Based on this, the mapping relationship between the constellation information and the subarray may be established.

In an optional manner, the mapping relationship between the constellation information and the subarray may be used to indicate a correspondence between constellation information of target data and a quantity of array units of a target subarray that sends the target data.

That the modulation manner is 16QAM is used as an example. Table 1 is an example of the mapping relationship.

**Table 1**

| Sequence Number | Target data | Constellation point | Amplitude relationship | Quantity of array units |
|---|---|---|---|---|
| 1 | 0000 | 0.3162+0.3162i | 1/3 | 160 |
| 2 | 0001 | 0.3162+0.9487i | $\sqrt{5/9}$ | 358 |
| 3 | 0010 | 0.9487+0.3162i | $\sqrt{5/9}$ | 358 |
| 4 | 0011 | 0.9487+0.9487i | 1 | 480 |
| 5 | 0100 | 0.3162-0.3162i | 1/3 | 160 |
| 6 | 0101 | 0.3162-0.9487i | $\sqrt{5/9}$ | 358 |
| 7 | 0110 | 0.9487-0.3162i | $\sqrt{5/9}$ | 358 |
| 8 | 0111 | 0.9487-0.9487i | 1 | 480 |
| 9 | 1000 | -0.3162+0.3162i | 1/3 | 160 |
| 10 | 1001 | -0.3162+0.9487i | $\sqrt{5/9}$ | 358 |

(continued)

| Sequence Number | Target data | Constellation point | Amplitude relationship | Quantity of array units |
|---|---|---|---|---|
| 11 | 1010 | -0.9487+0.3162i | $\sqrt{5/9}$ | 358 |
| 12 | 1011 | -0.9487+0.9487i | 1 | 480 |
| 13 | 1100 | -0.3162-0.3162i | 1/3 | 160 |
| 14 | 1101 | -0.3162-0.9487i | $\sqrt{5/9}$ | 358 |
| 15 | 1110 | -0.9487-0.3162i | $\sqrt{5/9}$ | 358 |
| 16 | 1111 | -0.9487-0.9487i | 1 | 480 |

In Table 1, an amplitude relationship column represents a ratio of an amplitude of the target data to a maximum amplitude in the constellation diagram. For example, when the target data is 1111, the amplitude relationship is 1, indicating that an amplitude of 1111 is the maximum amplitude in the constellation diagram. When the target data is 0000, an amplitude relationship is 1/3, indicating that an amplitude of 0000 is 1/3 of the maximum amplitude. A last column in Table 1 shows a quantity of array units of a subarray corresponding to each type of constellation information calculated based on Formula (5). Sequence numbers 1 and 5 in Table 1 are used as an example. An amplitude relationship of the target data 0000 with the sequence number 1 and an amplitude relationship of the target data 0100 with the sequence number 5 each are 1/3. In other words, a same amplitude of the two pieces of data needs to be obtained through modulation. Therefore, a quantity of array units of subarrays corresponding to each of the two pieces of data is 160.

It can be learned from Table 1 that, three subarrays may be used for the 16QAM modulation manner, and quantities of array units included by the three subarrays are respectively 160, 358, and 480. In a specific implementation process, for convenience of control, suboptimal values corresponding to these values may be selected. For example, it is assumed that the electromagnetic metasurface array includes a total of 15 rows and 32 columns, in other words, includes a total of 480 array units. Therefore, three subarrays respectively including 160, 360, and 480 array units may be used.

Table 2 is another example that is of the mapping relationship and that exists when the modulation manner is 64QAM.

**Table 2**

| Sequence Number | Target data | Constellation point | Amplitude relationship | Quantity of array units |
|---|---|---|---|---|
| 1 | 000000 | 0.4629+0.4629i | 0.4286 | 206 |
| 2 | 000001 | 0.4629+0.1543i | 0.3194 | 154 |
| 3 | 000010 | 0.1543+0.4629i | 0.3194 | 154 |
| 4 | 000011 | 0.1543+0.1543i | 0.1429 | 69 |
| 5 | 000100 | 0.4629+0.7715i | 0.5890 | 283 |
| 6 | 000101 | 0.4629+1.0801i | 0.7693 | 370 |
| 7 | 000110 | 0.1543+0.7715i | 0.5151 | 248 |
| 8 | 000111 | 0.1543+1.080li | 0.7143 | 343 |
| 9 | 001000 | 0.7715+0.4629i | 0.5890 | 283 |
| 10 | 001001 | 0.7715+0.1543i | 0.5151 | 248 |
| 11 | 001010 | 1.0801+0.4629i | 0.7693 | 370 |
| 12 | 001011 | 1.0801+0.1543i | 0.7143 | 343 |
| 13 | 001100 | 0.7715+0.7715i | 0.7143 | 343 |
| 14 | 001101 | 0.7715+1.0801i | 0.8690 | 418 |
| 15 | 001110 | 1.0801+0.7715i | 0.8690 | 418 |
| 16 | 001111 | 1.0801+1.0801i | 1.0000 | 280 |
| 17 | 010000 | 0.4629-0.4629i | 0.4286 | 206 |
| 18 | 010001 | 0.4629-0.1543i | 0.3194 | 154 |
| 19 | 010010 | 0.1543-0.4629i | 0.3194 | 154 |
| 20 | 010011 | 0.1543-0.1543i | 0.1429 | 69 |
| 21 | 010100 | 0.4629-0.7715i | 0.5890 | 283 |

(continued)

| Sequence Number | Target data | Constellation point | Amplitude relationship | Quantity of array units |
|---|---|---|---|---|
| 22 | 010101 | 0.4629-1.0801i | 0.7693 | 370 |
| 23 | 010110 | 0.1543-0.7715i | 0.5151 | 248 |
| 24 | 010111 | 0.1543-1.0801i | 0.7143 | 343 |
| 25 | 011000 | 0.7715-0.4629i | 0.5890 | 283 |
| 26 | 011001 | 0.7715-0.1543i | 0.5151 | 248 |
| 27 | 011010 | 1.0801-0.4629i | 0.7693 | 370 |
| 28 | 011011 | 1.0801-0.1543i | 0.7143 | 343 |
| 29 | 011100 | 0.7715-0.7715i | 0.7143 | 343 |
| 30 | 011101 | 0.7715-1.0801i | 0.8690 | 418 |
| 31 | 011110 | 1.0801-0.7715i | 0.8690 | 418 |
| 32 | 011111 | 1.0801-1.0801i | 1.0000 | 480 |
| 33 | 100000 | -0.4629+0.4629i | 0.4286 | 206 |
| 34 | 100001 | -0.4629+0.1543i | 0.3194 | 154 |
| 35 | 100010 | -0.1543+0.4629i | 0.3194 | 154 |
| 36 | 100011 | -0.1543+0.1543i | 0.1429 | 69 |
| 37 | 100100 | -0.4629+0.7715i | 0.5890 | 283 |
| 38 | 100101 | -0.4629+1.0801i | 0.7693 | 370 |
| 39 | 100110 | -0.1543+0.7715i | 0.5151 | 248 |
| 40 | 100111 | -0.1543+1.0801i | 0.7143 | 343 |
| 41 | 101000 | -0.7715+0.4629i | 0.5890 | 283 |
| 42 | 101001 | -0.7715+0.1543i | 0.5151 | 248 |
| 43 | 101010 | -1.0801+0.4629i | 0.7693 | 370 |
| 44 | 101011 | -1.0801+0.1543i | 0.7143 | 343 |
| 45 | 101100 | -0.7715+0.7715i | 0.7143 | 343 |
| 46 | 101101 | -0.7715+1.0801i | 0.8690 | 418 |
| 47 | 101110 | -1.0801+0.7715i | 0.8690 | 418 |
| 48 | 101111 | -1.0801+1.0801i | 1.0000 | 480 |
| 49 | 110000 | -0.4629-0.4629i | 0.4286 | 206 |
| 50 | 110001 | -0.4629-0.1543i | 0.3194 | 154 |
| 51 | 110010 | -0.1543-0.4629i | 0.3194 | 154 |
| 52 | 110011 | -0.1543-0.1543i | 0.1429 | 69 |
| 53 | 110100 | -0.4629-0.7715i | 0.5890 | 283 |
| 54 | 110101 | -0.4629-1.0801i | 0.7693 | 370 |
| 55 | 110110 | -0.1543-0.7715i | 0.5151 | 248 |
| 56 | 110111 | -0.1543-1.0801i | 0.7143 | 343 |
| 57 | 111000 | -0.7715-0.4629i | 0.5890 | 283 |
| 58 | 111001 | -0.7715-0.1543i | 0.5151 | 248 |
| 59 | 111010 | -1.0801-0.4629i | 0.7693 | 370 |
| 60 | 111011 | -1.0801-0.1543i | 0.7143 | 343 |
| 61 | 111100 | -0.7715-0.7715i | 0.7143 | 343 |
| 62 | 111101 | -0.7715-1.0801i | 0.8690 | 418 |
| 63 | 111110 | -1.0801-0.7715i | 0.8690 | 418 |
| 64 | 111111 | -1.0801-1.0801i | 1.0000 | 480 |

As illustrated in Table 2, nine subarrays may be used for 64QAM. It is assumed that the electromagnetic metasurface array includes a total of 480 array units. Therefore, sizes of the nine subarrays required by the transmitter may be respectively shown in Table 2: {69, 154, 206, 248, 283, 343, 370, 418, 480}. In a specific implementation process, for convenience of control, suboptimal values corresponding to these values may be selected. It is assumed that the electromagnetic metasurface array includes a total of 480 array units. Therefore, sizes of actually used subarrays may be {70, 160, 210, 250, 280, 340, 370, 420, 480}.

A correspondence between constellation information and a quantity of array units of a subarray is established, so that when data transmission needs to be performed, a size of a modulation subarray corresponding to the constellation point may be quickly determined by using a mapping table, to modulate information corresponding to the constellation point.

In another optional manner, the mapping relationship between the constellation information and the subarray may be used to indicate constellation information of target data and a start location and/or an end location of a target subarray that sends the target data.

In this manner, the start location and/or the end location of the target subarray can be used to uniquely determine an array unit included in the target subarray. For example, a quantity of array units of a subarray corresponding to each type of constellation information may be first calculated based on Formula (5), and a start location and/or an end location of the subarray is further selected.

In both of the two optional manners, a quantity of array units required for amplitude information is calculated based on Formula (5). To be specific, the quantity of array units of the target subarray may be obtained based on an amplitude of the target data in the constellation diagram, a maximum amplitude of the target data in the constellation diagram, and a quantity of array units of the electromagnetic metasurface array.

A modulation subarray determined in this manner can accurately modulate and send, in a given modulation manner, all information corresponding to the constellation point.

Optionally, the determined mapping relationship between constellation information and a subarray may be predetermined and stored in the transmitter. When the transmitter needs to send the first to-be-sent data, the subarray used for modulation may be determined based on the mapping relationship.

In an optional implementation, the transmitter may further adjust the mapping relationship.

In an example, the mapping relationship between the constellation information and the subarray may be adjusted based on a second system parameter. The second system parameter includes at least one of the following: a shape and a size of the electromagnetic metasurface array, a characteristic of an antenna feeder antenna, a carrier frequency, or a distance between the electromagnetic metasurface array and the antenna feeder antenna.

In another example, after determining the mapping relationship, another device may send the mapping relationship to the transmitter by using indication information, and the transmitter adjusts the mapping relationship based on the indication information.

In still another example, the transmitter may further adjust the mapping relationship based on air interface measurement information of a reference signal.

For example, the mapping relationship is adjusted based on measurement of a downlink reference signal, a downlink transmission control instruction, and a feedback of an uplink parameter.

The foregoing describes a process of determining the mapping relationship between the constellation information and the subarray and modulating the incident carrier signal based on the mapping relationship. The following describes a distribution manner of a target subarray that sends the target data in the electromagnetic metasurface array after the target subarray is obtained based on the mapping relationship.

For ease of description, the following embodiment is described by using an example in which the modulation manner illustrated in Table 1 is 16QAM, and there are three subarrays respectively including 160, 358, and 480 array units.

In an optional implementation, the array units of the target subarray are continuously distributed.

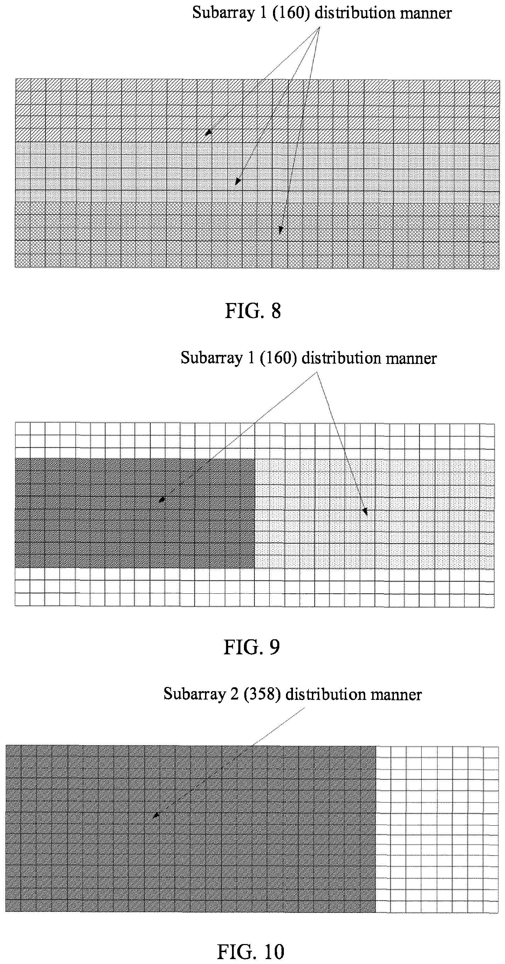

FIG. 8 is an example diagram of a distribution existing when a target subarray includes 160 array units. As shown in FIG. 8, the target subarray may be distributed at the top of the electromagnetic metasurface array and continuously distributed, or distributed in the middle of the electromagnetic metasurface array and continuously distributed, or distributed at the bottom of the electromagnetic metasurface array and continuously distributed.

FIG. 9 is an example diagram of another distribution existing when a target subarray includes 160 array units. As shown in FIG. 9, the target subarray may be distributed on a leftmost side of the electromagnetic metasurface array and continuously distributed, or distributed on a rightmost side of the electromagnetic metasurface array and continuously distributed.

FIG. 10 is an example diagram of a distribution existing when a target subarray includes 358 array units. As shown in FIG. 10, the target subarray may be distributed on the leftmost side of the electromagnetic metasurface array and continuously distributed.

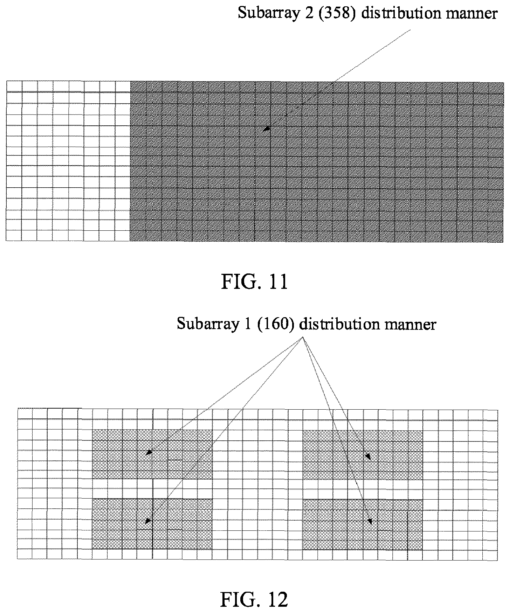

FIG. 11 is an example diagram of another distribution existing when a target subarray includes 358 array units. As shown in FIG. 11, the target subarray may be distributed on the rightmost side of the electromagnetic metasurface array and continuously distributed.

It should be noted that, for data that needs to be modulated by using 160 or 358 array units, a specific distribution manner in the foregoing examples may be selected, or some distribution manners may be selected, or distribution manners may be sequentially selected. For example, for target data that needs to be modulated by using 160 array units, a distribution manner in which the 160 array units are distributed at the top is currently used, and when 160 array units are used next time for modulation, the distribution manner in which the 160 array units are distributed in the middle may be used. A specific corresponding manner only needs to be preset.

The array units of the target subarray are continuously distributed, to select a required modulation subarray by using a small quantity of control parameters, and reduce processing complexity.

In another optional implementation, the array units of the target subarray are discretely distributed.

FIG. 12 is an example diagram of a discrete distribution existing when a target subarray includes 160 array units. As shown in FIG. 12, four discretely distributed subarrays are jointly used as the target subarray. In other words, the target subarray is discretely distributed.

The array units of the target subarray are discretely distributed, to flexibly use all units of a metasurface, and enhance robustness in performance of the metasurface array.

In an optional implementation, if a quantity of array units of a second subarray is greater than a quantity of array units of a first subarray, the second subarray includes all array units of the first subarray.

For example, as illustrated in Table 1, 16QAM may include three subarrays respectively including 160, 358, and 480 array units. In this case, a subarray including 358 array units may include all array units of a subarray including 160 array units, and a subarray including 480 array units includes all array units of the subarray including 358 array units. This distribution manner is a complete overlapping-based distribution manner.

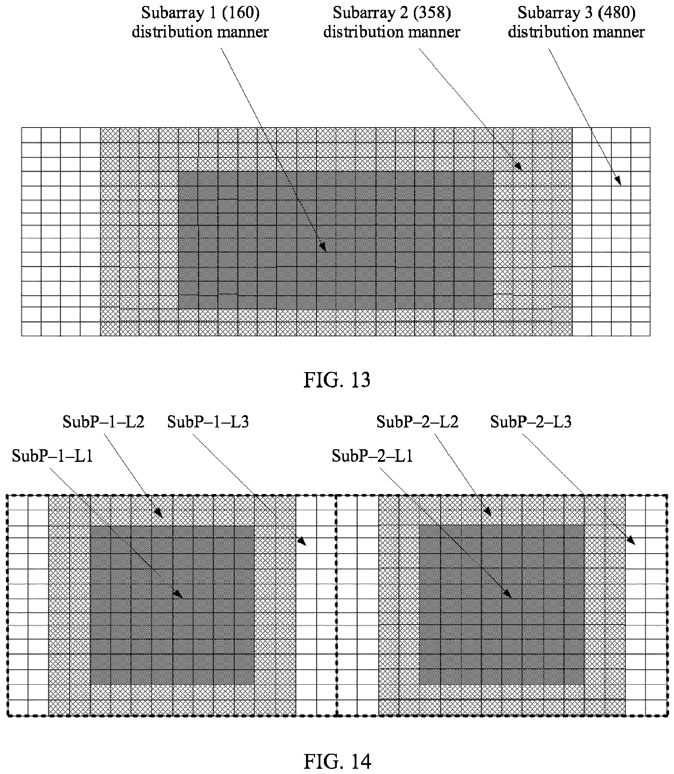

FIG. 13 is an example diagram of a complete overlapping-based distribution manner of 16QAM. As shown in FIG. 13, the subarray including 160 array units is distributed at a central location of the electromagnetic metasurface array; the subarray including 358 array units extends outwards by using, as a center, the subarray including 160 array units, and completely covers the subarray including 160 array units, and the subarray including 480 array units extends outwards by using, as a center, the subarray including 358 array units, and completely covers the subarray including 358 array units.

By using the complete overlapping-based distribution manner, a high-quality device may be used in an overlapping region to design the array unit, and a low-precision device may be used in a non-overlapping region to design the array unit, to reduce costs of the electromagnetic metasurface array when modulation is implemented. Alternatively, an array unit at a central region included by all subarrays is used as a mandatory unit, and another peripheral array unit is used as an option, to reduce subarray selection complexity.

In an operating process of the transmitter, only one data stream may need to be sent at a same moment, which may be referred to as single-stream transmission, or a plurality of data streams may need to be sent at a same moment, which may be referred to as multi-stream transmission. If multi-stream transmission is performed at a same moment, a plurality of sent data streams may be data streams sent to a same receiving device, or may be data streams sent to different receiving devices.

If the transmitter performs single-stream transmission, the target subarray may be directly selected in the method in the foregoing embodiment, and any one of the foregoing subarray distribution manners may be used. Details are not described again.

The following describes a processing process existing when the transmitter performs multi-stream transmission. For ease of description, the following provides descriptions by using an example in which the transmitter sends two data streams at a same moment. When more than two data streams are sent at a same moment, a processing manner is the same as that used when two data streams are sent.

Optionally, if the transmitter obtains second to-be-sent data when obtaining the first to-be-sent data, in other words, there is second to-be-sent data that is sent at a same time point as the first to-be-sent data, a second target subarray may be controlled to perform, based on constellation information of the second to-be-sent data, amplitude and phase modulation on an incident carrier signal that reaches the second target subarray, and the second target subarray sends a modulated carrier signal corresponding to the second to-be-sent data.

An array unit of the second target subarray does not overlap the array unit of the first target subarray.

As described above, the quantity of array units of the subarray corresponding to each type of constellation information may be calculated based on Formula (5). A parameter $K$ in Formula (5) indicates that the $K$ units may be used to jointly implement the maximum modulated amplitude. That the electromagnetic metasurface array includes 480 array units is used as an example. During single-stream transmission, a maximum value of K may be 480. In other words, all the 480 array units may be used for single-stream transmission. When the first to-be-sent data and the second to-be-sent data need to be transmitted simultaneously, for each piece of data, a value of K decreases correspondingly. For example, a value of $K$ corresponding to the first to-be-sent data is 240, and a value of $K$ corresponding to the second to-be-sent data is 240. Correspondingly, for multi-stream transmission, a mapping relationship that is between constellation information and a subarray and that is different from that exists in single-stream transmission may be determined based on the value of $K,$ to ensure that no overlapping exists during transmission of different data streams. A specific process is not described again.

The following describes different distribution manners of subarrays that transmit the first to-be-sent data and the second to-be-sent data during multi-stream transmission.

First, a distribution manner that is of a subarray and that exists when receiving devices of the first to-be-sent data and the second to-be-sent data are the same is described.

In one case, when the receiving devices of the first to-be-sent data and the second to-be-sent data are a same device, and the modulation manner of the first to-be-sent data is the same as a modulation manner of the second to-be-sent data, the quantity of array units of the first target subarray used to send the first to-be-sent data is the same as a quantity of array units of the second target subarray used to send the second to-be-sent data.

That the receiving devices of the first to-be-sent data and the second to-be-sent data are a same device means that the first to-be-sent data and the second to-be-sent data are sent to a same device. For example, both the first to-be-sent data and the second to-be-sent data are sent to a terminal device A.

For example, two streams, respectively the first to-be-sent data and the second to-be-sent data, are transmitted to the same terminal device A. The two pieces of data correspond to a same service. Therefore, service requirements of the two pieces of data are the same, and modulation manners of the two pieces of data may be the same. In this case, two target subarrays that have a same size and that do not overlap may be allocated to the two pieces of data.

FIG. 14 is an example diagram of a target subarray distribution manner used when 16QAM is used for each of two pieces of data. As shown in FIG. 14, two subarrays corresponding to two data streams may be respectively distributed on left and right sides of the electromagnetic metasurface array, and a half of array units of the electromagnetic metasurface array are used for each subarray. Herein, $SubP - i - Lj$ represents a subarray at a corresponding level j in an $i^{th}$ subarray. For example, $SubP - 1 - L1$ represents a subarray at a $1^{st}$ level in the $1^{st}$ subarray, namely, a subarray including a smallest quantity of array units.

For example, a location of the first target subarray in the electromagnetic metasurface array is symmetrical to a location of the second target subarray in the electromagnetic metasurface array.

Target subarrays that have a same size and that do not overlap are allocated to two pieces of data that are sent to a same device and that have a same modulation manner, to simultaneously transmit dual streams of a single user, and improve spectral efficiency or a transmission rate of transmission from a system to a user. The "user" may be a receiving device. Details are not described below again.

In another case, when the receiving devices of the first to-be-sent data and the second to-be-sent data are a same device, and the modulation manner of the first to-be-sent data is different from a modulation manner of the second to-be-sent data, the quantity of array units of the first target subarray used to send the first to-be-sent data is different from a quantity of array units of the second target subarray used to send the second to-be-sent data.

If different service data needs to be transmitted to a same device, modulation manners of the different service data may be different. For example, a higher-order modulation manner is used for service data that has a high latency requirement.

Optionally, if a modulation order of the first to-be-sent data is higher than a modulation order of the second to-be-sent data, the quantity of array units of the first target subarray is greater than the quantity of array units of the second target subarray.

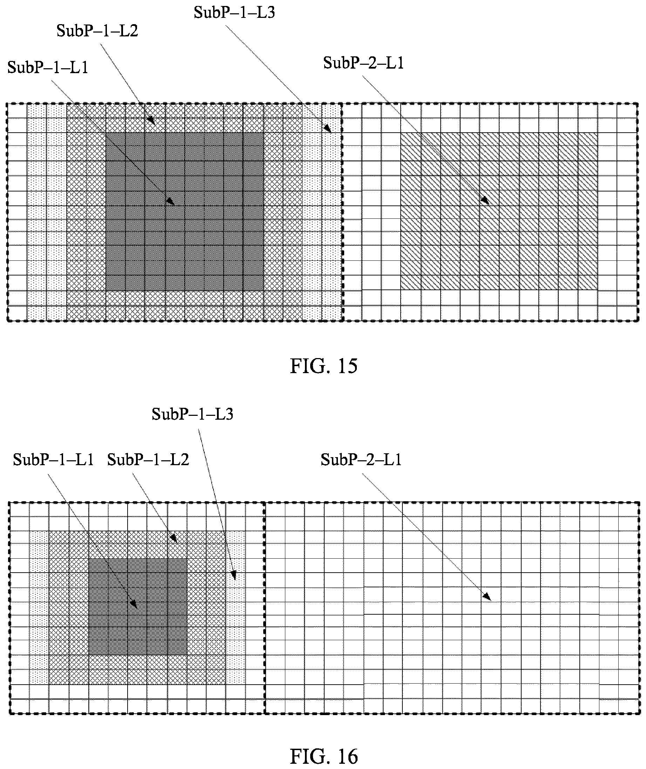

FIG. 15 is an example diagram of a target subarray distribution manner used when different modulation manners are used for two pieces of data. As shown in FIG. 15, the modulation manner of the first to-be-sent data is 16QAM, and a modulation manner of the second to-be-sent data is phase shift keying (phase shift keying, PSK). For the PSK modulation manner, there may be only one type of subarray. Therefore, based on the constellation information of the first to-be-sent data, a subarray corresponding to the first to-be-sent data may be one of $SubP - 1 - L1$, $SubP - 2 - L2$, and $SubP - 1 - L3$, and a subarray of the second to-be-sent data is $SubP - 2 - L1$.

Target subarrays that have different sizes and that do not overlap are allocated to two pieces of data that are sent to a same device and that have different modulation manners, to efficiently transmit a plurality of services of a same user, and meet a requirement of the plurality of services for a transmission indicator.

A distribution manner that is of a subarray and that exists when receiving devices of the first to-be-sent data and the second to-be-sent data are different is described below.

Optionally, if the receiving devices of the first to-be-sent data and the second to-be-sent data are different devices, in an optional manner, the quantity of array units of the first target subarray is different from the quantity of array units of the second target subarray.

Subarrays including different quantities of array units are allocated to data sent to different receiving devices, to optimally allocate an available resource of the electromagnetic metasurface, and maximize a total rate of the system.

In another optional manner, the quantity of array units of the first target subarray is the same as the quantity of array units of the second target subarray. In this manner, an implementation is simple, and processing complexity of the system can be reduced.

When the transmitter needs to simultaneously transmit data to a plurality of receiving devices, transmission channel quality corresponding to a plurality of data streams differs greatly for different receiving devices. Therefore, during multi-stream transmission, non-overlapping division may be performed on the electromagnetic metasurface array, different subarrays correspond to data streams transmitted to different devices, and an independent modulation manner and different beamforming vectors may be used for each data procedure. For example, if two data streams are transmitted to two receiving devices, the data corresponds to different channel quality or different services. Therefore, the data has different service requirements. In this case, the data may be modulated and transmitted by configuring two subarrays that have a same size and that do not overlap and by using different modulation manners or a same modulation manner. Correspondingly, the subarray distribution manner illustrated in FIG. 14 or the subarray distribution manner illustrated in FIG. 15 may be used. For a specific process, refer to the descriptions in FIG. 14 and FIG. 15. Details are not described herein again.

In some scenarios, for example, data of a receiving device is ultra-reliable and low latency communications (ultra-reliable and low latency communications, URLLC) data. For such data, although a transmission rate requirement is low, in other words, a lower-level modulation manner may be selected, the data has a high reliability requirement. Therefore, a large subarray needs to be allocated to the data. FIG. 16 is an example diagram of a subarray distribution existing when data with a high reliability requirement exists during multi-stream transmission. As shown in FIG. 15, a left side is a subarray used to transmit data in high-order modulation, for example, a subarray of 16QAM, and a right side is a subarray used to transmit URLLC data. It can be learned from FIG. 16 that although modulation performed on the URLLC data is not high-order modulation, a larger subarray is allocated due to a high reliability requirement of the URLLC data.

It should be noted that FIG. 14 to FIG. 16 are merely several examples of a subarray distribution existing during multi-stream transmission. For each subarray, a distribution of array units inside the subarray may be a continuous distribution, a discrete distribution, or a complete overlapping-based distribution manner in the examples in FIG. 8 to FIG. 13. For details, refer to descriptions in FIG. 8 to FIG. 13. Details are not described herein again.

In a specific implementation process, in addition to modulating the incident carrier signal based on the constellation information, if beamforming transmission needs to be performed on a reflected signal, the transmitter needs to modulate the incident carrier signal with reference to the beamforming information.

Optionally, when performing amplitude and phase modulation on the incident carrier signal based on the constellation information of the first to-be-sent data, the transmitter may control the first target subarray that sends the first to-be-sent data to perform, based on the constellation information and beamforming information of the first to-be-sent data, amplitude and phase modulation on the incident carrier signal that reaches the first target subarray.

Through beamforming, energy of a signal reflected by the electromagnetic metasurface may be converged, to enhance equivalent channel quality of the user, improve a data transmission rate of the user and transmission efficiency of the system, and suppress signal interference between a plurality of users.

The beamforming information may be phase information of a beamforming vector. The beamforming information may be sent by the baseband processor to the transmitter.

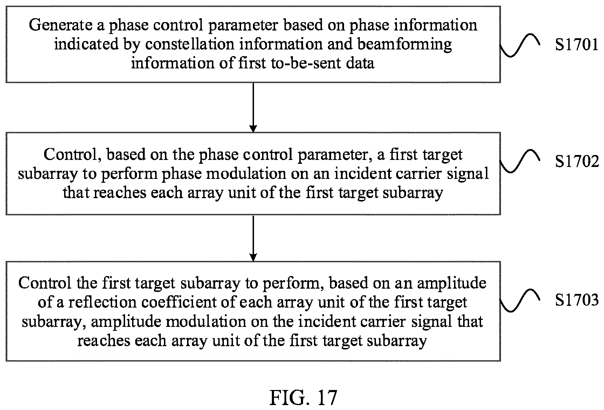

FIG. 17 is a schematic flowchart of performing amplitude and phase modulation based on constellation information and beamforming information of first to-be-sent data. As shown in FIG. 17, a modulation procedure includes the following steps.

S1701: Generate the phase control parameter based on phase information indicated by the constellation information and the beamforming information of the first to-be-sent data.

A first control parameter may be generated based on the phase information indicated by the constellation information; a second control parameter is generated based on the beamforming information of the first to-be-sent data; and the first control parameter and the second control parameter are added, to obtain the phase control parameter.

For example, the first control parameter may be generated based on the phase information indicated by the constellation information and a preset mapping relationship between a phase and a control parameter.

As described above, all the array units of the first target subarray have a same phase modulation amount, namely, $e^{j\varphi}$ for the incident carrier signal. In a beamforming-based transmission manner, it is assumed that the quantity of array units of the first target subarray is K. Therefore, a weight coefficient used by each array unit to complete beamforming may be $e^{j\vartheta_k}$. Therefore, a phase amount, namely, the phase control parameter, that needs to be used by each array unit for adjustment may be calculated based on Formula (6).

$$\alpha_k = \varphi + \vartheta_k \tag{6}$$

The controller of the transmitter may select corresponding control voltage information based on $\alpha_k$, to control the first target subarray to perform phase modulation on the incident carrier signal.

It is assumed that there is one receiving antenna on a receiving device side. Therefore, a channel between the receiving device and the transmitter may be represented as a vector $h^T$ shown in Formula (7).

$$\mathbf{h}^T = \left[ \beta_1 e^{j\theta_1}, ..., \beta_K e^{j\theta_K} \right] \tag{7}$$

Herein, $\beta_k e^{j\theta k}$ represents a channel between a $k^{th}$ array unit and the receiving device, $\beta_k$ is amplitude information of the channel, $\beta_k \geq 0$, and $\theta_k$ is phase information of the channel. A beam vector for the receiving device is shown in Formula (8).

$$\mu = \left[ e^{-j\theta_1}, ..., e^{-j\theta_K} \right] \tag{8}$$

Therefore, $\vartheta_k = -\theta_k$. A signal $r$ received by the receiving device end may be expressed in a form in Formula (9).

$$r(t) = \mathbf{h}^T \mathbf{s}$$

$$= \left[ \beta_1 e^{j\theta_1}(t), ..., \beta_K e^{j\theta_K}(t) \right] \begin{bmatrix} A_1 e^{j\alpha_1}(t) \\ ... \\ A_1 e^{j\alpha_1}(t) \end{bmatrix} e^{j(2\pi f_c t)}$$

$$= \left[ \beta_1 e^{j\theta_1}(t), ..., \beta_K e^{j\theta_K}(t) \right] \begin{bmatrix} A_1 e^{j(\varphi-\theta_1)}(t) \\ ... \\ A_K e^{j(\varphi-\theta K)} \end{bmatrix} e^{j(2\pi f_c t)} \tag{9}$$

$$= \left[ \beta_1 e^{j\theta_1}(t), ..., \beta_K e^{j\theta_K}(t) \right] \begin{bmatrix} A_1 e^{-j\theta}(t) \\ ... \\ A_K e^{-j\theta_K} \end{bmatrix} e^{j(2\pi f_c t + \varphi)}$$

$$= \left( \sum_{k=1}^{K} \beta_k A_k \right) e^{j(2\pi f_c t + \varphi)}$$

It can be learned from Formula (9) that the receiving device obtains a sending gain of beamforming-based transmission.

S1702: Control, based on the phase control parameter, the first target subarray to perform phase modulation on the incident carrier signal that reaches each array unit of the first target subarray.

After the phase control parameter is obtained, digital-to-analog conversion may be performed on the phase control parameter, to obtain a phase control signal, which may be specifically the bias voltage shown in FIG. 7. The phase control signal is input into the first target subarray, so that the first target subarray performs, based on the phase control signal, phase modulation on the incident carrier signal that reaches each array unit of the first target subarray.

S1703: Control the first target subarray to perform, based on an amplitude of a reflection coefficient of each array unit of the first target subarray, amplitude modulation on the incident carrier signal that reaches each array unit of the first target subarray.

Steps S1702 and S1703 are simultaneously performed in parallel, and the two steps may be specifically completed based on Formula (4). To be specific, the phase control signal corresponding to the phase control parameter and an amplitude of a transmission coefficient of each array unit of the first target subarray are used as input parameters, and a reflected carrier signal may be obtained based on Formula (4).

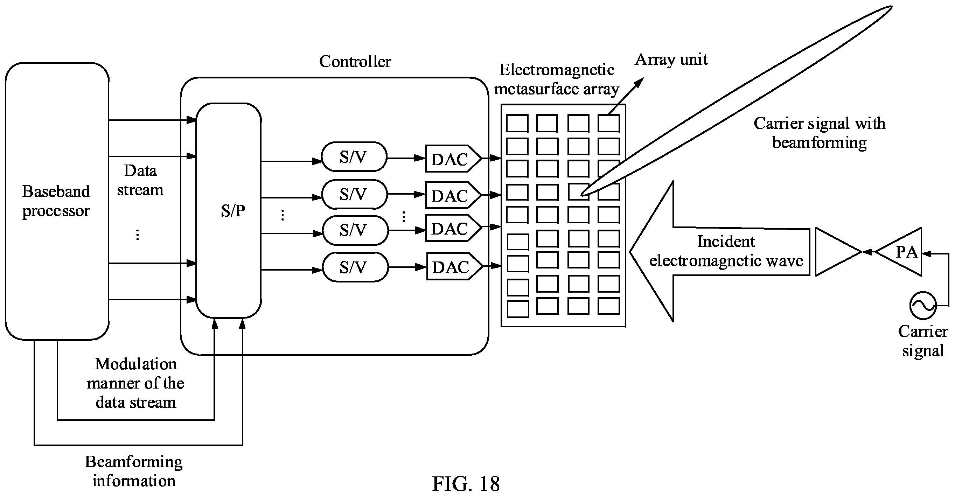

FIG. 18 is a schematic interaction diagram of processing and sending first to-be-sent data based on beamforming information. As shown in FIG. 18, in addition to sending the data stream and the modulation manner of the data stream to the controller, the baseband processor further sends the beamforming information. After receiving the data stream, the controller divides the data stream into groups based on the modulation manner. One group is the first to-be-sent data. The controller selects the first target subarray based on the constellation information of the first to-be-sent data and the mapping relationship. The controller may learn, based on the constellation information of the first to-be-sent data, of the phase information that needs to be modulated, and add the phase information and phase information indicated by the beamforming information, to obtain the phase control parameter. The phase control parameter is mapped onto the voltage information that is used to control the phase of the incident carrier signal, digital-to-analog conversion is performed on the voltage information, to obtain the bias voltage, and the bias voltage is input into each array unit of the first target subarray. Then, each array unit reflects a carrier signal on which beamforming is performed.

In the foregoing embodiment, for the transmitter, it is necessary to satisfy as much as possible that there is a same phase when the incident carrier signal reaches each array unit. In other words, there is a same wavefront phase when the incident carrier signal reaches the array unit, or a wavefront phase difference between different array units is less than $\pi/8$. In addition, a distance between every two array units of the electromagnetic metasurface array varies from 1/10 wavelength to 1/2 wavelength. Therefore, the array units of the electromagnetic metasurface array may be densely arranged, and a power contribution of each array unit to a transmit signal of the entire electromagnetic metasurface array is small. Therefore, the transmitter may select an available array of the electromagnetic metasurface array based on a first system parameter.

All array units of the available array have similar processing capabilities for an incident electromagnetic wave. Therefore, the available array may be divided into subarrays, to implement corresponding amplitude modulation, and the array unit or the subarray performs phase modulation, to implement amplitude and phase modulation of an incident electron wave, so as to improve transmission efficiency of the system.

For example, the first system parameter may include at least one of the following: a shape and a size of the electromagnetic metasurface array, a characteristic of an antenna feeder antenna, a carrier frequency, or a distance between the electromagnetic metasurface array and the antenna feeder antenna.

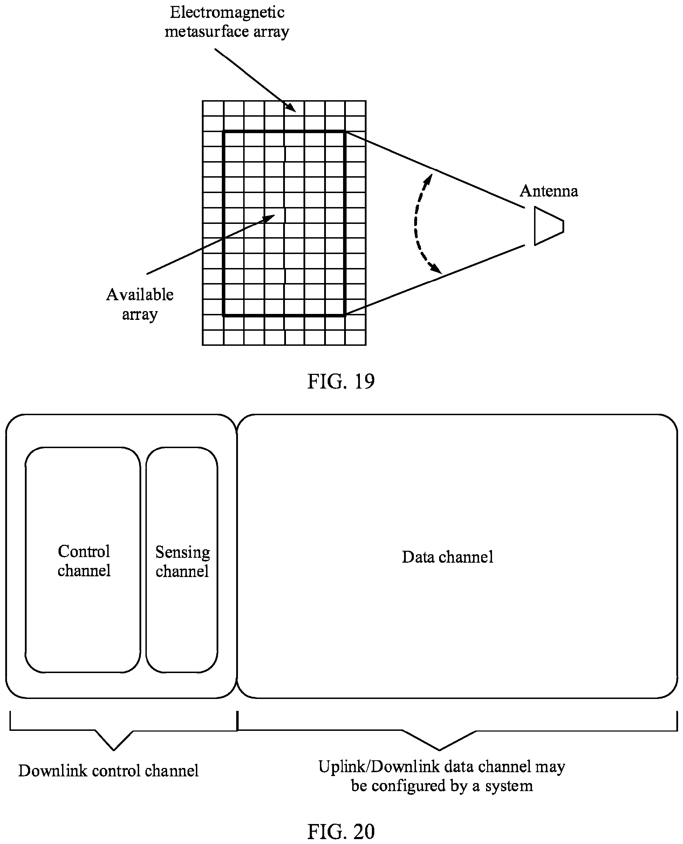

FIG. 19 is an example diagram in which a transmitter selects an available array based on a first system parameter. As shown in FIG. 19, a quantity of array units of the selected available array is less than a quantity of all array units of the electromagnetic metasurface array.

The quantity of available arrays determined based on the first system parameter may be less than the quantity of array units of the electromagnetic metasurface array shown in FIG. 19, or may be equal to the quantity of array units of the electromagnetic metasurface array.

Based on this, the transmitter modulates the incident electromagnetic wave by using the available array as a reference. For example, when the transmitter determines a mapping relationship between the constellation information and a target subarray based on Formula (5), a value of the parameter K needs to be the quantity of array units of the available array, rather than the quantity of array units of the electromagnetic metasurface array. For another example, when the mapping relationship that is between constellation information and a subarray and that exists during multi-stream transmission is determined, a sum of values of K that correspond to the mapping relationship needs to be the quantity of array units of the available array, rather than the quantity of array units of the electromagnetic metasurface array.

Correspondingly, both the determined first target subarray and the determined second target subarray are subarrays of the available array.

Correspondingly, if the quantity of array units of the second subarray is greater than the quantity of array units of the first subarray, the second subarray includes all the array units of the first subarray. Both the second subarray and the first subarray are subarrays of the available array.

In an optional implementation, in this embodiment of this application, a preconfigured reference signal may be sent on a sensing channel, to sense an operating status of a hardware parameter of the system.

Optionally, the transmitter may send the reference signal. The reference signal is obtained after the electromagnetic metasurface array adjusts the phase and the amplitude of the incident carrier signal based on reference data. Further, the status information of the electromagnetic metasurface array is determined based on the reference signal. The status information can be used to represent a hardware parameter of the electromagnetic metasurface array.

The electromagnetic metasurface array herein may be specifically the available array.

In an optional manner, the transmitter may send the reference signal through a downlink control channel.

In another optional manner, the transmitter may determine the status information of the electromagnetic metasurface array based on the air interface measurement information of the reference signal.

In still another optional manner, the transmitter may further determine the status information of the electromagnetic metasurface array based on a response signal of the reference signal.

FIG. 20 is a schematic diagram of sending a reference signal through a downlink control channel. As shown in FIG. 20, the downlink control channel includes a control channel and a sensing channel. The control channel is used to complete a conventional control channel function, and the sensing channel is used to complete sending of the reference signal. The sensing channel includes specific reference signals with different power allocations and a guard slot, and the reference signals with different power allocations have different feature parameters. A feature parameter configuration manner of transmission on the sensing channel may be configured by the system by default, or may be configured and delivered through a common control channel of a front end.

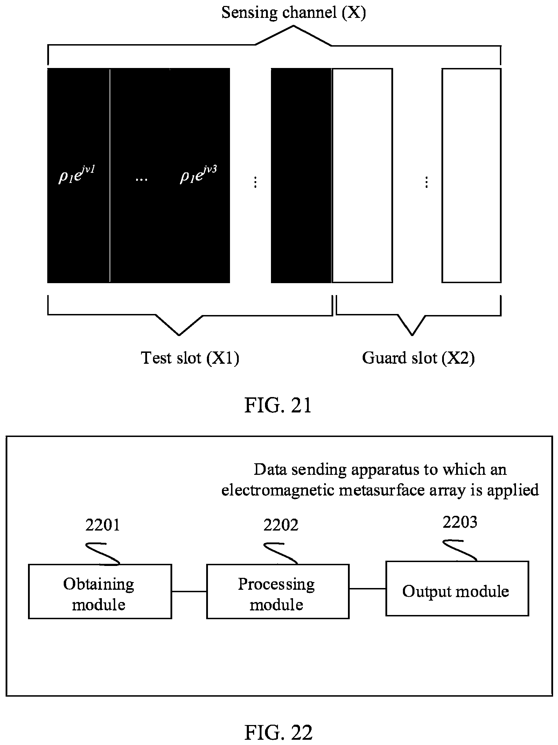

FIG. 21 is a schematic diagram of an example structure of a sensing channel. As shown in FIG. 21, the sensing channel includes X sending slots or sending symbols. On the sensing channel, X1 slots or symbols are used to sense a system parameter, and a predefined or dynamically configured symbol is sent in each slot. The symbols have different amplitude and phase information. Sensing of the hardware parameter of the system may be obtained through air interface measurement or a feedback from the receiving device. In addition, X2 guard slots are reserved on the sensing channel, to isolate the sensing channel from a subsequent channel, and ensure system parameter sensing accuracy and timeliness of conversion between different time slots. Specifically, guard slots need to be at intervals during downlink-to-uplink conversion, to align with uplink receiving of the plurality of receiving devices, and no guard slot is required for uplink-to-downlink conversion. A plurality of combination and configuration solutions may be used for parameters (X1, X2) based on an application environment.

The foregoing manner of sensing the operating status of the hardware parameter of the system by sending the reference signal through the sensing channel has the following effects:

(1) The sensing channel may be configured periodically or semi-persistently. Therefore, extra overheads of resources of the downlink control channel can be reduced, and a capacity of the control channel can be ensured. For example, when a user access phase or a transmission environment changes, the slot is configured to transmit data used to correct a parameter of the transmitter.

(2) The control channel may independently complete a task of initializing and updating a parameter of the transmitter, to achieve high efficiency.

(3) The sensing channel may be used to support a service requirement of a lower latency or a determined latency requirement.

FIG. 22 is a diagram of a module structure of a data sending apparatus to which an electromagnetic metasurface array is applied according to an embodiment of this application. The apparatus may be the foregoing transmitter, or may be an apparatus that enables the transmitter to implement a function of the transmitter in the method provided in embodiments of this application. For example, the apparatus may be an apparatus or a chip system in the transmitter. As shown in FIG. 22, the apparatus includes an obtaining module 2201, a processing module 2202, and an output module 2203.

The obtaining module 2201 is configured to obtain first to-be-sent data.

The processing module 2202 is configured to: determine, based on constellation information of the first to-be-sent data and a mapping relationship between the constellation information and a subarray, a first target subarray used to send the first to-be-sent data, where the first target subarray is a subarray of the electromagnetic metasurface array, and the first target subarray includes a preset quantity of array units; and control the first target subarray to perform, based on the constellation information, amplitude and phase modulation on an incident carrier signal that reaches the first target subarray.

The output module 2203 is configured to output a modulated carrier signal corresponding to the first to-be-sent data.

In an optional implementation, the mapping relationship between the constellation information and the subarray is used to indicate a correspondence between constellation information of target data and a quantity of array units of a target subarray that sends the target data.

In an optional implementation, the quantity of array units of the target subarray is obtained based on an amplitude of the target data in a constellation diagram, a maximum amplitude of the target data in the constellation diagram, and a quantity of array units of the electromagnetic metasurface array.

In an optional implementation, the array units of the target subarray are continuously distributed, or the array units of the target subarray are discretely distributed.

In an optional implementation, the processing module 2202 is further configured to:
if there is second to-be-sent data that is sent at a same time point as the first to-be-sent data, control a second target subarray to perform, based on constellation information of the second to-be-sent data, amplitude and phase modulation on an incident carrier signal that reaches the second target subarray.

The output module 2203 is further configured to output a modulated carrier signal corresponding to the second to-be-sent data.

An array unit of the second target subarray does not overlap the array unit of the first target subarray.

In an optional implementation, if receiving devices of the first to-be-sent data and the second to-be-sent data are a same device, and a modulation manner of the first to-be-sent data is the same as a modulation manner of the second to-be-sent data, the quantity of array units of the first target subarray is the same as a quantity of array units of the second target subarray; or if receiving devices of the first to-be-sent data and the second to-be-sent data are a same device, and a modulation manner of the first to-be-sent data is different from a modulation manner of the second to-be-sent data, the quantity of array units of the first target subarray is different from a quantity of array units of the second target subarray.

In an optional implementation, if a modulation order of the first to-be-sent data is higher than a modulation order of the second to-be-sent data, the quantity of array units of the first target subarray is greater than the quantity of array units of the second target subarray.

In an optional implementation, if the receiving devices of the first to-be-sent data and the second to-be-sent data are different devices, the quantity of array units of the first target subarray is different from the quantity of array units of the second target subarray.

In an optional implementation, the processing module 2202 is specifically configured to:
control the first target subarray to perform, based on the constellation information and beamforming information of the first to-be-sent data, amplitude and phase modulation on the incident carrier signal that reaches the first target subarray.

In an optional implementation, the processing module 2202 is specifically configured to:
generate a phase control parameter based on phase information indicated by the constellation information and the beamforming information of the first to-be-sent data; control, based on the phase control parameter, the first target subarray to perform phase modulation on the incident carrier signal that reaches each array unit of the first target subarray; and control the first target subarray to perform, based on an amplitude of a reflection coefficient of each array unit of the first target subarray, amplitude modulation on the incident carrier signal that reaches each array unit of the first target subarray.

In an optional implementation, the processing module 2202 is specifically configured to:
generate a first control parameter based on the phase information indicated by the constellation information; generate a second control parameter based on the beamforming information of the first to-be-sent data; and add the first control parameter and the second control parameter, to obtain the phase control parameter.

In an optional implementation, the processing module 2202 is specifically configured to:
generate the first control parameter based on the phase information indicated by the constellation information and a preset mapping relationship between a phase and a control parameter.

In an optional implementation, the processing module 2202 is specifically configured to:
perform digital-to-analog conversion on the phase control parameter, to obtain a phase control signal; and input the phase control signal into the first target subarray, so that the first target subarray performs, based on the phase control signal, phase modulation on the incident carrier signal that reaches each array unit of the first target subarray.

In an optional implementation, the processing module 2202 is further configured to:
determine an available array in the electromagnetic metasurface array based on a first system parameter, where the first system parameter includes at least one of the following: a shape and a size of the electromagnetic metasurface array, a characteristic of an antenna feeder antenna, a carrier frequency, or a distance between the electromagnetic metasurface array and the antenna feeder antenna.

In an optional implementation, the first target subarray is a subarray of the available array.

In an optional implementation, if a quantity of array units of a second subarray is greater than a quantity of array units of a first subarray, the second subarray includes all array units of the first subarray. Both the second subarray and the first subarray are subarrays of the available array.

In an optional implementation, the processing module 2202 is further configured to:
adjust the mapping relationship between the constellation information and the subarray.

In an optional implementation, the processing module 2202 is specifically configured to:
adjust the mapping relationship between the constellation information and the subarray based on a second system parameter, where the second system parameter includes at least one of the following: a shape and a size of the electromagnetic metasurface array, a characteristic of an antenna feeder antenna, a carrier frequency, and a distance between the electromagnetic metasurface array and the antenna feeder antenna; or receive indication information, where the indication information is used to indicate the mapping relationship between the constellation information and the subarray; or adjust the mapping relationship between the constellation information and the subarray based on air interface measurement information of a reference signal.

An embodiment of this application further provides a chip, including a communications interface and an integrated circuit. The communications interface is configured to: obtain to-be-processed first to-be-sent data and output a modulated carrier signal corresponding to the first to-be-sent data. The integrated circuit is configured to process the first to-be-sent data in the method in the foregoing embodiment, to obtain the modulated carrier signal corresponding to the first to-be-sent data.

The data sending apparatus to which the electromagnetic metasurface array is applied provided in embodiments of this application may perform method steps in the foregoing method embodiment. Implementation principles and technical effects thereof are similar, and details are not described herein again.

It should be noted that, it should be understood that division into modules of the apparatus is merely division into logical functions. In an actual implementation, all or some units may be integrated into one physical entity, or may be physically separated. In addition, these modules may be all implemented in a form of calling software by a processing element, may be all implemented in a form of hardware, or may be partially implemented in a form of calling software by a processing element. Some modules are implemented in a form of hardware. For example, a determining module may be a separately disposed processing element, or may be integrated into a chip of the apparatus for implementation. In addition, the determining module may be stored in a memory of the apparatus in a form of program code, and a processing element of the apparatus invokes and executes a function of the determining module. An implementation of another module is similar. In addition, all or some of these modules may be integrated together, or may be implemented independently. The processing element may be an integrated circuit and has a signal processing capability. In an implementation process, steps in the foregoing methods or the foregoing modules can be implemented by using a hardware integrated logical circuit in the processing element, or by using instructions in a form of software.

For example, the modules may be one or more integrated circuits configured to implement the foregoing method, for example, one or more application-specific integrated circuits (application specific integrated circuit, ASIC), one or more microprocessors (digital signal processor, DSP), or one or more field programmable gate arrays (field programmable gate array, FPGA). For another example, when a specific module is implemented in a form of scheduling program code by the processing element, the processing element may be a general purpose processor, for example, a central processing unit (central processing unit, CPU) or another processor that may invoke the program code. For another example, the modules may be integrated together and implemented in a form of a system-on-a-chip (system-on-a-chip, SOC).

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

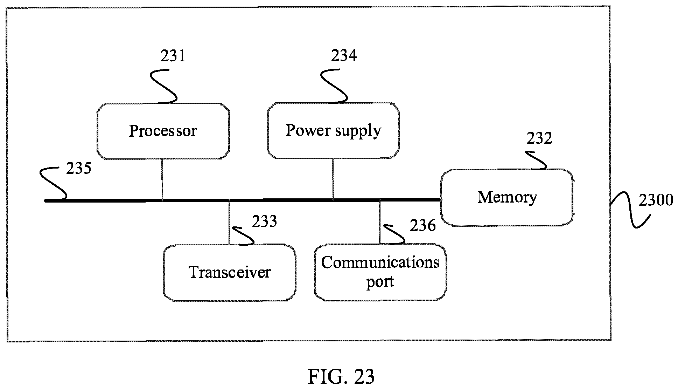

FIG. 23 is a schematic diagram of a structure of a communications apparatus according to an embodiment of this application. The communications apparatus may be, for example, the transmitter in the foregoing embodiments, or may be a radio access network device, a terminal device, or the like on which a transmitter is deployed. As shown in FIG. 23, a communications apparatus 2300 may include a processor 231 (for example, a CPU), a memory 232, and a transceiver 233. The transceiver 233 is coupled to the processor 231, and the processor 231 controls a transceiver action of the transceiver 233. The memory 232 may store various instructions, to complete various processing functions and implement method steps performed by the transmitter in embodiments of this application. The memory and the processor may be coupled through a communications interface, or may be integrated together.

Optionally, the communications apparatus in this embodiment of this application may further include a power supply 234, a system bus 235, and a communications port 236. The transceiver 233 may be integrated in a transceiver of the communications apparatus, or may be an independent transceiver antenna on the communications apparatus. The system bus 235 is used to implement a communication connection between elements. The communications port 236 is configured to implement a connection and communication between the communications apparatus and another peripheral.

In this embodiment of this application, the processor 231 is configured to: be coupled to the memory 232, and read and execute the instructions in the memory 232, to implement method steps performed by the transmitter in the foregoing method embodiment. The transceiver 233 is coupled to the processor 231, and the processor 231 controls the transceiver 233 to send and receive a message. Implementation principles and technical effects thereof are similar, and details are not described herein again.

The system bus mentioned in FIG. 23 may be a peripheral component interconnect (peripheral component interconnect, PCI) bus, an extended industry standard architecture (extended industry standard architecture, EISA) bus, or the like. The system bus may be classified into an address bus, a data bus, a control bus, and the like. For ease of indication, the bus is indicated by using only one bold line in the figure. However, it does not indicate that there is only one bus or only one type of bus. The communications interface is configured to implement communication between a database access apparatus and another device (such as a client, a read/write database, or a read-only database). The memory may include a RAM, and may further include a nonvolatile memory (non-volatile memory), for example, at least one magnetic disk storage.

The processor mentioned in FIG. 23 may be a general purpose processor, including a central processing unit CPU, a network processor (network processor, NP), and the like, or may be a digital signal processor DSP, an application-specific integrated circuit ASIC, a field programmable gate array FPGA, another programmable logical device, a discrete gate or transistor logic device, or a discrete hardware component.

Optionally, an embodiment of this application further provides a readable storage medium. The storage medium stores instructions. When the instructions run on a computer, the computer is enabled to perform the method in the embodiment shown in FIG. 5 to FIG. 21.

Optionally, an embodiment of this application further provides a chip for running instructions, and the chip is configured to perform the method in the embodiment shown in FIG. 5 to FIG. 21.

An embodiment of this application further provides a program product. The program product includes a computer program, the computer program is stored in a storage medium, and at least one processor may read the computer program from the storage medium. When the at least one processor executes the computer program, the method in the embodiment shown in FIG. 5 to FIG. 21 may be implemented.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. A character "/" usually indicates an "or" relationship between associated objects. In a formula, "/" usually indicates a "divisible" relationship between associated objects. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of the present invention. The execution sequences of the processes should be determined based on functions and internal logic of the processes, and should not be construed as any limitation on the implementation processes of embodiments of this application.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of the present invention.

**Claims**

1. A data sending method to which an electromagnetic metasurface array is applied, wherein the method comprises:

   obtaining first to-be-sent data;
   determining, based on constellation information of the first to-be-sent data and a mapping relationship between the constellation information and a subarray, a first target subarray used to send the first to-be-sent data, wherein the first target subarray is a subarray of the electromagnetic metasurface array, and the first target subarray comprises a preset quantity of array units; and
   controlling the first target subarray to perform, based on the constellation information, amplitude and phase modulation on an incident carrier signal that reaches the first target subarray, and sending, by using the first target subarray, a modulated carrier signal corresponding to the first to-be-sent data.

2. The method according to claim 1, wherein the mapping relationship between the constellation information and the subarray is used to indicate a correspondence between constellation information of target data and a quantity of array units of a target subarray that sends the target data.

3. The method according to claim 2, wherein the quantity of array units of the target subarray is obtained based on an amplitude of the target data in a constellation diagram, a maximum amplitude of the target data in the constellation diagram, and a quantity of array units of the electromagnetic metasurface array.

4. The method according to claim 2 or 3, wherein the array units of the target subarray are continuously distributed, or the array units of the target subarray are discretely distributed.

5. The method according to any one of claims 1 to 4, further comprising:

   if there is second to-be-sent data that is sent at a same time point as the first to-be-sent data, controlling a second target subarray to perform, based on constellation information of the second to-be-sent data, amplitude and phase modulation on an incident carrier signal that reaches the second target subarray, and sending, by using the second target subarray, a modulated carrier signal corresponding to the second to-be-sent data, wherein

an array unit of the second target subarray does not overlap the array unit of the first target subarray.

6. The method according to claim 5, wherein if receiving devices of the first to-be-sent data and the second to-be-sent data are a same device, and a modulation manner of the first to-be-sent data is the same as a modulation manner of the second to-be-sent data, the quantity of array units of the first target subarray is the same as a quantity of array units of the second target subarray; or

if receiving devices of the first to-be-sent data and the second to-be-sent data are a same device, and a modulation manner of the first to-be-sent data is different from a modulation manner of the second to-be-sent data, the quantity of array units of the first target subarray is different from a quantity of array units of the second target subarray.

7. The method according to claim 6, wherein if a modulation order of the first to-be-sent data is higher than a modulation order of the second to-be-sent data, the quantity of array units of the first target subarray is greater than the quantity of array units of the second target subarray.

8. The method according to any one of claims 5 to 7, wherein if the receiving devices of the first to-be-sent data and the second to-be-sent data are different devices, the quantity of array units of the first target subarray is different from the quantity of array units of the second target subarray.

9. The method according to any one of claims 1 to 8, wherein the controlling the first target subarray to perform, based on the constellation information, amplitude and phase modulation on an incident carrier signal that reaches the first target subarray comprises:
controlling the first target subarray to perform, based on the constellation information and beamforming information of the first to-be-sent data, amplitude and phase modulation on the incident carrier signal that reaches the first target subarray.

10. The method according to claim 9, wherein the controlling the first target subarray to perform, based on the constellation information, amplitude and phase modulation on an incident carrier signal that reaches the first target subarray comprises:

generating a phase control parameter based on phase information indicated by the constellation information and the beamforming information of the first to-be-sent data;
controlling, based on the phase control parameter, the first target subarray to perform phase modulation on the incident carrier signal that reaches each array unit of the first target subarray; and
controlling the first target subarray to perform, based on an amplitude of a reflection coefficient of each array unit of the first target subarray, amplitude modulation on the incident carrier signal that reaches each array unit of the first target subarray.

11. The method according to claim 10, wherein the generating a phase control parameter based on phase information indicated by the constellation information and the beamforming information of the first to-be-sent data comprises:

generating a first control parameter based on the phase information indicated by the constellation information;
generating a second control parameter based on the beamforming information of the first to-be-sent data; and
adding the first control parameter and the second control parameter, to obtain the phase control parameter.

12. The method according to claim 11, wherein the generating a first control parameter based on the phase information indicated by the constellation information comprises:
generating the first control parameter based on the phase information indicated by the constellation information and a preset mapping relationship between a phase and a control parameter.

13. The method according to any one of claims 10 to 12, wherein the controlling, based on the phase control parameter, the first target subarray to perform phase modulation on the incident carrier signal that reaches each array unit of the first target subarray comprises:

performing digital-to-analog conversion on the phase control parameter, to obtain a phase control signal; and
inputting the phase control signal into the first target subarray, so that the first target subarray performs, based on the phase control signal, phase modulation on the incident carrier signal that reaches each array unit of the first target subarray.

14. The method according to any one of claims 1 to 13, wherein the method further comprises:
determining an available array in the electromagnetic metasurface array based on a first system parameter, wherein the first system parameter comprises at least one of the following: a shape and a size of the electromagnetic metasurface array, a characteristic of an antenna feeder antenna, a carrier frequency, or a distance between the electromagnetic metasurface array and the antenna feeder antenna.

15. The method according to claim 14, wherein the first target subarray is a subarray of the available array.

16. The method according to claim 14 or 15, wherein if a quantity of array units of a second subarray is greater than a quantity of array units of a first subarray, the second subarray comprises all array units of the first subarray, and both the second subarray and the first subarray are subarrays of the available array.

17. The method according to any one of claims 1 to 16, wherein the method further comprises:
adjusting the mapping relationship between the constellation information and the subarray.

18. The method according to claim 17, wherein the adjusting the mapping relationship between the constellation information and the subarray comprises:

adjusting the mapping relationship between the constellation information and the subarray based on a second system parameter, wherein the second system parameter comprises at least one of the following: a shape and a size of the electromagnetic metasurface array, a characteristic of an antenna feeder antenna, a carrier frequency, and a distance between the electromagnetic metasurface array and the antenna feeder antenna; or
receiving indication information, wherein the indication information is used to indicate the mapping relationship between the constellation information and the subarray; or
adjusting the mapping relationship between the constellation information and the subarray based on air interface measurement information of a reference signal.

19. A data sending apparatus to which an electromagnetic metasurface array is applied, wherein the apparatus comprises:

an obtaining module, configured to obtain first to-be-sent data;
a processing module, configured to: determine, based on constellation information of the first to-be-sent data and a mapping relationship between the constellation information and a subarray, a first target subarray used to send the first to-be-sent data, wherein the first target subarray is a subarray of the electromagnetic metasurface array, and the first target subarray comprises a preset quantity of array units; and
control the first target subarray to perform, based on the constellation information, amplitude and phase modulation on an incident carrier signal that reaches the first target subarray; and
an output module, configured to output a modulated carrier signal corresponding to the first to-be-sent data.

20. The apparatus according to claim 19, wherein the mapping relationship between the constellation information and the subarray is used to indicate a correspondence between constellation information of target data and a quantity of array units of a target subarray that sends the target data.

21. The apparatus according to claim 20, wherein the quantity of array units of the target subarray is obtained based on an amplitude of the target data in a constellation diagram, a maximum amplitude of the target data in the constellation diagram, and a quantity of array units of the electromagnetic metasurface array.

22. The apparatus according to claim 20 or 21, wherein the array units of the target subarray are continuously distributed, or the array units of the target subarray are discretely distributed.

23. The apparatus according to any one of claims 19 to 22, wherein the processing module is further configured to:

if there is second to-be-sent data that is sent at a same time point as the first to-be-sent data, control a second target subarray to perform, based on constellation information of the second to-be-sent data, amplitude and phase modulation on an incident carrier signal that reaches the second target subarray; and
the output module is further configured to output a modulated carrier signal corresponding to the second to-be-sent data, wherein
an array unit of the second target subarray does not overlap the array unit of the first target subarray.

24. The apparatus according to claim 23, wherein if receiving devices of the first to-be-sent data and the second to-be-sent data are a same device, and a modulation manner of the first to-be-sent data is the same as a modulation manner of the second to-be-sent data, the quantity of array units of the first target subarray is the same as a quantity of array units of the second target subarray; or
if receiving devices of the first to-be-sent data and the second to-be-sent data are a same device, and a modulation manner of the first to-be-sent data is different from a modulation manner of the second to-be-sent data, the quantity of array units of the first target subarray is different from a quantity of array units of the second target subarray.

25. The apparatus according to claim 24, wherein if a modulation order of the first to-be-sent data is higher than a modulation order of the second to-be-sent data, the quantity of array units of the first target subarray is greater than the quantity of array units of the second target subarray.

26. The apparatus according to any one of claims 23 to 25, wherein if the receiving devices of the first to-be-sent data and the second to-be-sent data are different devices, the quantity of array units of the first target subarray is different from the quantity of array units of the second target subarray.

27. The apparatus according to any one of claims 19 to 26, wherein the processing module is specifically configured to: control the first target subarray to perform, based on the constellation information and beamforming information of the first to-be-sent data, amplitude and phase modulation on the incident carrier signal that reaches the first target subarray.

28. The apparatus according to claim 27, wherein the processing module is specifically configured to:

    generate a phase control parameter based on phase information indicated by the constellation information and the beamforming information of the first to-be-sent data;
    control, based on the phase control parameter, the first target subarray to perform phase modulation on the incident carrier signal that reaches each array unit of the first target subarray; and
    control the first target subarray to perform, based on an amplitude of a reflection coefficient of each array unit of the first target subarray, amplitude modulation on the incident carrier signal that reaches each array unit of the first target subarray.

29. The apparatus according to claim 28, wherein the processing module is specifically configured to:

    generate a first control parameter based on the phase information indicated by the constellation information;
    generate a second control parameter based on the beamforming information of the first to-be-sent data; and
    add the first control parameter and the second control parameter, to obtain the phase control parameter.

30. The apparatus according to claim 29, wherein the processing module is specifically configured to:
    generate the first control parameter based on the phase information indicated by the constellation information and a preset mapping relationship between a phase and a control parameter.

31. The apparatus according to any one of claims 28 to 30, wherein the processing module is specifically configured to:

    perform digital-to-analog conversion on the phase control parameter, to obtain a phase control signal; and
    input the phase control signal into the first target subarray, so that the first target subarray performs, based on the phase control signal, phase modulation on the incident carrier signal that reaches each array unit of the first target subarray.

32. The apparatus according to any one of claims 19 to 31, wherein the processing module is further configured to:
    determine an available array in the electromagnetic metasurface array based on a first system parameter, wherein the first system parameter comprises at least one of the following: a shape and a size of the electromagnetic metasurface array, a characteristic of an antenna feeder antenna, a carrier frequency, or a distance between the electromagnetic metasurface array and the antenna feeder antenna.

33. The apparatus according to claim 32, wherein the first target subarray is a subarray of the available array.

34. The apparatus according to claim 32 or 33, wherein if a quantity of array units of a second subarray is greater than a quantity of array units of a first subarray, the second subarray comprises all array units of the first subarray, and both the second subarray and the first subarray are subarrays of the available array.

35. The apparatus according to any one of claims 19 to 34, wherein the processing module is further configured to: adjust the mapping relationship between the constellation information and the subarray.

36. The apparatus according to claim 35, wherein the processing module is specifically configured to: adjust the mapping relationship between the constellation information and the subarray based on a second system parameter, wherein the second system parameter comprises at least one of the following: a shape and a size of the electromagnetic metasurface array, a characteristic of an antenna feeder antenna, a carrier frequency, and a distance between the electromagnetic metasurface array and the antenna feeder antenna; or receive indication information, wherein the indication information is used to indicate the mapping relationship between the constellation information and the subarray; or adjust the mapping relationship between the constellation information and the subarray based on air interface measurement information of a reference signal.

37. A communications apparatus, comprising a processor, wherein processor is connected to a memory, the memory is configured to store a computer program, and the processor is configured to execute the computer program stored in the memory, so that the communications apparatus performs the method according to any one of claims 1 to 18.

38. The apparatus according to claim 37, wherein the processor and the memory are integrated together.

39. A chip, comprising a communications interface and an integrated circuit, wherein the integrated circuit is configured to: process, in the method according to any one of claims 1 to 18, first to-be-sent data obtained through the communications interface, obtain a modulated carrier signal corresponding to the first to-be-sent data, and output the modulated carrier signal through the communications interface.

40. A computer-readable storage medium, wherein the computer-readable storage medium stores a computer program, and when the computer program is run, the method according to any one of claims 1 to 18 is implemented.

41. A computer program product, wherein the computer program product comprises computer program code, and when the computer program code is executed by a computer, the method according to any one of claims 1 to 18 is performed.

FIG. 1

MIMO transmitter

Radio access device 210

Terminal device 220

Terminal device 230

FIG. 2

FIG. 3

FIG. 4

Obtain first to-be-sent data — S501

Determine, based on constellation information of the first to-be-sent data and a mapping relationship between the constellation information and a subarray, a first target subarray used to send the first to-be-sent data, where the first target subarray is a subarray of the electromagnetic metasurface array, and the first target subarray includes a preset quantity of array units — S502

Control the first target subarray to perform, based on the constellation information, amplitude and phase modulation on an incident carrier signal that reaches the first target subarray, and send, by using the first target subarray, a modulated carrier signal corresponding to the first to-be-sent data — S503

FIG. 5

FIG. 6

FIG. 7

Subarray 1 (160) distribution manner

FIG. 8

Subarray 1 (160) distribution manner

FIG. 9

Subarray 2 (358) distribution manner

FIG. 10

Subarray 2 (358) distribution manner

FIG. 11

Subarray 1 (160) distribution manner

FIG. 12

Subarray 1 (160)
distribution manner

Subarray 2 (358)
distribution manner

Subarray 3 (480)
distribution manner

FIG. 13

SubP–1–L2    SubP–1–L3

SubP–1–L1

SubP–2–L2    SubP–2–L3

SubP–2–L1

FIG. 14

SubP–1–L2        SubP–1–L3

SubP–1–L1                    SubP–2–L1

FIG. 15

SubP–1–L3

SubP–1–L1   SubP–1–L2        SubP–2–L1

FIG. 16

Generate a phase control parameter based on phase information
indicated by constellation information and beamforming
information of first to-be-sent data

S1701

Control, based on the phase control parameter, a first target
subarray to perform phase modulation on an incident carrier signal
that reaches each array unit of the first target subarray

S1702

Control the first target subarray to perform, based on an amplitude
of a reflection coefficient of each array unit of the first target
subarray, amplitude modulation on the incident carrier signal that
reaches each array unit of the first target subarray

S1703

FIG. 17

FIG. 18

EP 4 152 635 A1

Electromagnetic
metasurface array

Antenna

Available
array

FIG. 19

| Control channel | Sensing channel | Data channel |

Downlink control channel

Uplink/Downlink data channel may
be configured by a system

FIG. 20

Sensing channel (X)

$$\rho_1 e^{jv1} \quad \ldots \quad \rho_1 e^{jv3} \quad \vdots \qquad \vdots$$

Test slot (X1)                    Guard slot (X2)

FIG. 21

Data sending apparatus to which an
electromagnetic metasurface array is applied

2201              2202              2203

| Obtaining module | Processing module | Output module |

FIG. 22

FIG. 23

## INTERNATIONAL SEARCH REPORT

| International application No. |
|---|
| **PCT/CN2021/092197** |

**A. CLASSIFICATION OF SUBJECT MATTER**

H04B 7/06(2006.01)i

According to International Patent Classification (IPC) or to both national classification and IPC

**B. FIELDS SEARCHED**

Minimum documentation searched (classification system followed by classification symbols)

H04B H04L

Documentation searched other than minimum documentation to the extent that such documents are included in the fields searched

Electronic data base consulted during the international search (name of data base and, where practicable, search terms used)

CNKI, CNPAT, WPI, EPODOC: 电磁, 超表面, 阵列, 星座, 映射, 对应, 数量, 个数, 大小, 改变, 选择, 幅度, 相位, 调制, electromagnetic, super-surface, array, constellation, mapping, correspond+, number, size, change, selection, amplitude, phase, modulation

**C. DOCUMENTS CONSIDERED TO BE RELEVANT**

| Category* | Citation of document, with indication, where appropriate, of the relevant passages | Relevant to claim No. |
|---|---|---|
| X | CN 111130574 A (SOUTHEAST UNIVERSITY) 08 May 2020 (2020-05-08) description, paragraphs [0004]-[0051], and figures 1-5 | 1-41 |
| A | CN 107395548 A (INSTITUTE OF ELECTRONIC ENGINEERING, CHINA ACADEMY OF ENGINEERING PHYSICS) 24 November 2017 (2017-11-24) entire document | 1-41 |
| A | CN 110855589 A (SOUTHEAST UNIVERSITY) 28 February 2020 (2020-02-28) entire document | 1-41 |
| A | WO 2017053523 A1 (QUALCOMM INC.) 30 March 2017 (2017-03-30) entire document | 1-41 |
| A | US 2009103593 A1 (BERGAMO, Marcos Antonio) 23 April 2009 (2009-04-23) entire document | 1-41 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 July 2021** | **26 July 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/092197**

| Patent document cited in search report | | | Publication date (day/month/year) | Patent family member(s) | | | Publication date (day/month/year) |
|---|---|---|---|---|---|---|---|
| CN | 111130574 | A | 08 May 2020 | None | | | |
| CN | 107395548 | A | 24 November 2017 | None | | | |
| CN | 110855589 | A | 28 February 2020 | None | | | |
| WO | 2017053523 | A1 | 30 March 2017 | US | 2018123225 | A1 | 03 May 2018 |
| US | 2009103593 | A1 | 23 April 2009 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010479712